# EUROPEAN PATENT SPECIFICATION

(11) **EP 4 371 840 B1**
(45) Date of publication and mention of the grant of the patent: **10.12.2025**
(21) Application number: 22842180.6
(22) Date of filing: 14.07.2022
(51) Int. Cl.: B61B 13/00, B25J 5/00, B65G 1/04, B66F 9/06, G05D 1/228, G05D 1/229, G05D 1/246, G05D 1/628, G05D 105/28, G05D 107/70, G05D 109/10

(54) **AUTONOMOUS BOGIE AND METHOD FOR ASSEMBLING AUTONOMOUS BOGIE**
AUTONOM FAHRENDES BOGIE UND VERFAHREN ZUR MONTAGE EINES AUTONOM FAHRENDEN BOGIES
BOGIE À DÉPLACEMENT AUTONOME ET PROCÉDÉ D'ASSEMBLAGE D'UN BOGIE À DÉPLACEMENT AUTONOME

(30) Priority: 15.07.2021 JP 2021117245
(43) Date of publication of application: 22.05.2024
(73) Proprietor: Sumitomo Heavy Industries, Ltd., Tokyo 141-6025 (JP)
(72) Inventor: TOKUDA, Takashi, Kyoto 619-0238 (JP); KURIMOTO, Naoaki, Kyoto 619-0238 (JP); OKU, Hiroyuki, Kyoto 619-0238 (JP)
(74) Representative: Louis Pöhlau Lohrentz
(86) International application number: PCT/JP2022/027723
(87) International publication number: WO 2023/286838

(56) References cited:
- CN-A- 111 251 271
- CN-U- 207 571 576
- JP-A- 2003 275 284
- JP-A- 2004 206 440
- JP-A- 2007 283 958
- JP-A- 2008 126 709
- JP-A- 2012 188 061
- JP-A- 2015 140 155
- JP-A- 2018 105 718
- JP-A- 2019 163 001
- JP-A- 2019 163 001
- JP-A- S6 249 413

## Description

### Technical Field

The present disclosure relates to an autonomous bogie.

### Background Art

PTL 1 discloses an autonomous bogie including a vehicle body, a wheel drive unit that drives wheels, and a control unit that controls the operation of a bogie.

JP 2019 163001 A, CN 111 251 271 A and CN 207 571 576 U also disclose an autonomous bogie comprising a wheel drive unit and a control unit.

### Citation List

### Patent Literature

[PTL 1] Japanese Unexamined Patent Publication No. 2015-060388

### Summary of Invention

### Technical Problem

The inventors of the present application have found a new idea for obtaining good workability when assembling an autonomous bogie.

One of an object of the present disclosure is to disclose a technique capable of obtaining good workability when assembling an autonomous bogie.

### Solution to Problem

An aspect of the present disclosure is an autonomous bogie. The autonomous bogie is an autonomous bogie including: a vehicle body; a partition member that is provided on the vehicle body and vertically partitions a vehicle body internal space; a wheel drive unit that is disposed on a lower side of the partition member; a control unit that is disposed on an upper side of the partition member; and a cable that is disposed across the partition member and connects the wheel drive unit and the control unit.

Another aspect of the present disclosure is an assembly method for an autonomous bogie. This assembly method is an assembly method for an autonomous bogie, including: a step of attaching a wheel drive unit to a lower side of a partition member that vertically partitions a vehicle body internal space of a vehicle body; a step of attaching a control unit to an upper side of the partition member; and a step of connecting the wheel drive unit and the control unit with a cable disposed across the partition member.

### Brief Description of Drawings

Fig. 1 is a perspective view of an AMR of an embodiment as viewed from an obliquely upper side.
Fig. 2 is a perspective view of the AMR of the embodiment as viewed from an obliquely lower side.
Fig. 3 is a plan view of the AMR of the embodiment.
Fig. 4 is a front view of the AMR of the embodiment.
Fig. 5 is a right side view of the AMR of the embodiment.
Fig. 6 is a left side view of the AMR of the embodiment.
Fig. 7 is a rear view of the AMR of the embodiment.
Fig. 8 is a bottom view of the AMR of the embodiment.
Fig. 9 is a plan view showing a state in which a top plate of the AMR of the embodiment is removed.
Fig. 10 is an explanatory diagram of carrying the AMR of the embodiment.
Fig. 11 is a partially transparent perspective view showing an LED lamp.
Fig. 12 is an explanatory diagram of an operation screen in a browser application.
Fig. 13 is an explanatory diagram of the operation screen.
Fig. 14 is an explanatory diagram of a map creation mode.
Figs. 15A and 15B are explanatory diagrams of a wall-following mode.
Fig. 16 is an explanatory diagram of a method of setting a current position.
Fig. 17 is an explanatory diagram of a method of modifying a map shape.
Fig. 18 is an explanatory diagram of a method of setting a no-travel area.
Fig. 19 is a first explanatory diagram of a method of creating a task set.
Fig. 20 is a second explanatory diagram of a method of creating a task set.
Fig. 21 is a diagram for explaining buttons on a task set display screen.
Fig. 22 is an explanatory diagram of a line trace.
Fig. 23 is an explanatory diagram of a cross line.
Fig. 24 is an explanatory diagram of a custom method of the AMR.
Fig. 25 is an explanatory diagram of an I/O port.
Fig. 26 is an explanatory diagram of another custom method of the AMR.
Fig. 27 is a cross-sectional view of the AMR of the embodiment as viewed from the rear.
Fig. 28 is a cross-sectional view of the AMR of the embodiment as viewed from the side.
Fig. 29 is a perspective view showing a partition member of the embodiment together with a peripheral structure.
Fig. 30 is a first explanatory diagram relating to an assembly method of the embodiment.
Fig. 31 is a second explanatory diagram relating to the assembly method of the embodiment.
Fig. 32 is a third explanatory diagram relating to the assembly method of the embodiment.
Fig. 33 is a fourth explanatory diagram relating to the assembly method of the embodiment.
Fig. 34 is a schematic diagram relating to a plurality of wheels of the embodiment.
Fig. 35 is a schematic diagram showing a state in which the AMR of the embodiment is riding on a step portion of a traveling surface.
Fig. 36 is a cross-sectional view showing the battery of the embodiment together with the peripheral structure as viewed from the side.
Fig. 37 is a schematic diagram showing a battery of the embodiment together with a peripheral structure as viewed from the side.
Fig. 38 is a schematic diagram showing a relationship between a battery and a guide rail.
Fig. 39 is a schematic diagram showing a relationship between a battery and a handle.
Fig. 40A is a schematic diagram showing a state in which a key switch is in an on position, Fig. 40B shows a state in which the key switch is in an off position, and Fig. 40C shows a state in which the key switch is in an unlock position.
Fig. 41A is an explanatory diagram relating to a second condition, and Fig. 41B is an explanatory diagram of a method of removing a storage medium.
Fig. 42A is an explanatory diagram relating to a third condition, and Fig. 42B is an explanatory diagram of a method of removing a storage medium.
Fig. 43 is a front view of an AMR to which a closing member is attached.
Fig. 44 is an explanatory diagram showing how to attach the closing member to the vehicle body.
Fig. 45 is a cross-sectional view showing a camera together with a peripheral structure.

### Description of Embodiments

Hereinafter, embodiments will be described. The same reference numerals will be assigned to the same components, and repeated description will be omitted. In each drawing, for convenience of explanation, components are omitted, enlarged, or reduced as appropriate. The drawings shall be viewed according to the direction of the reference numerals.

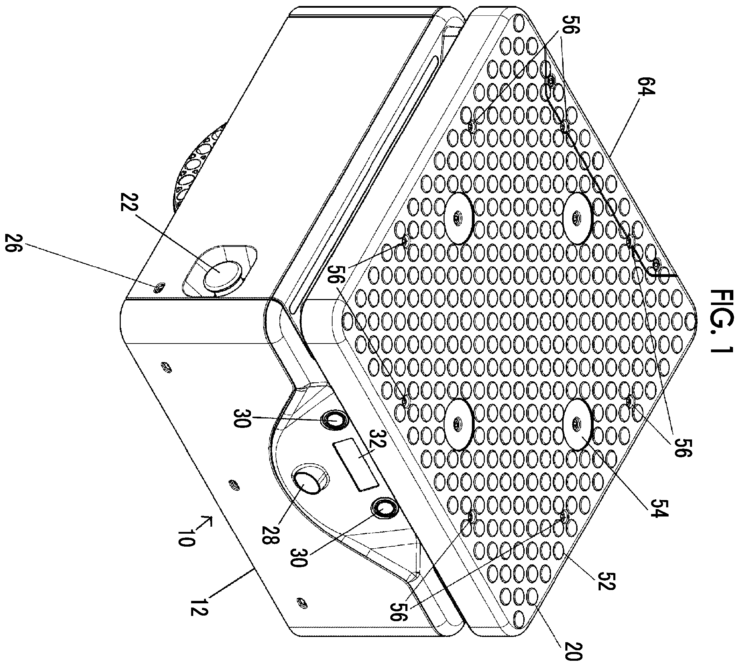

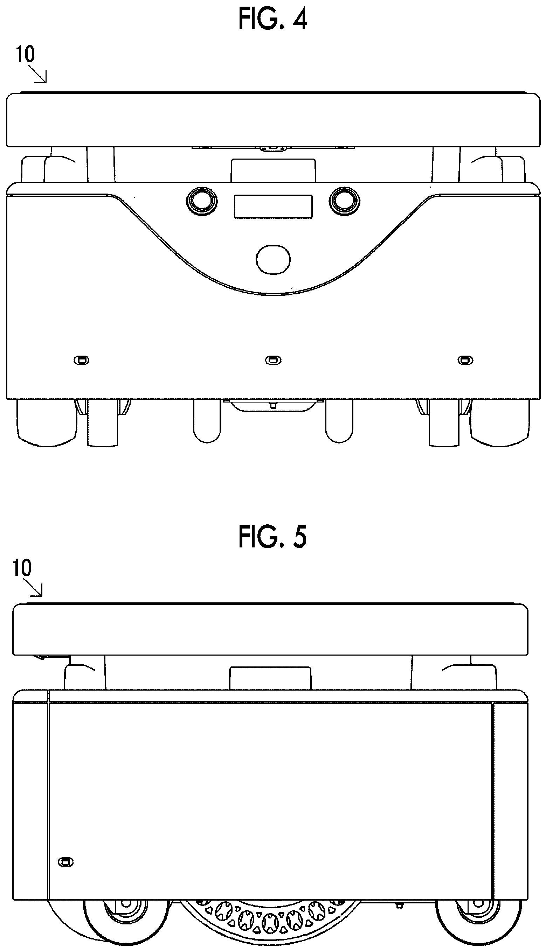

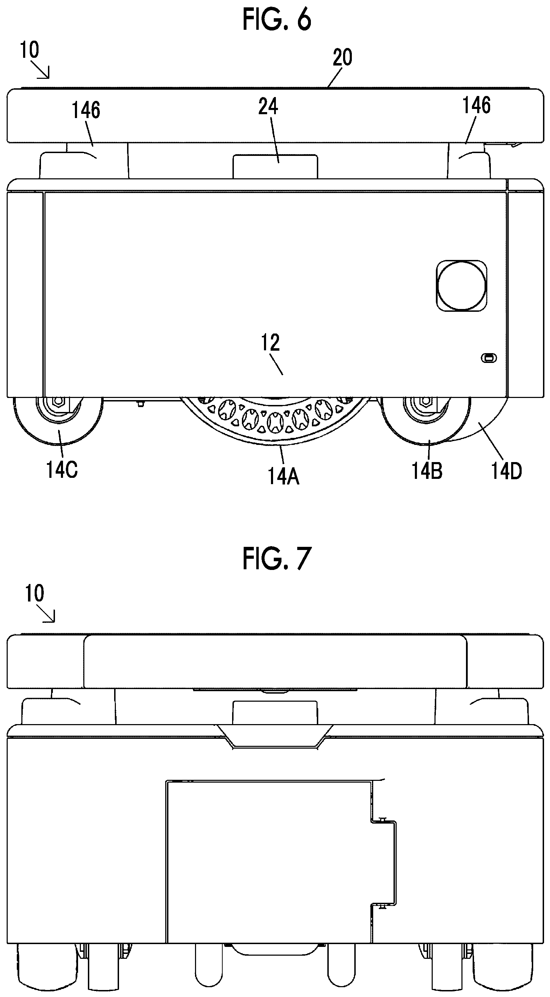

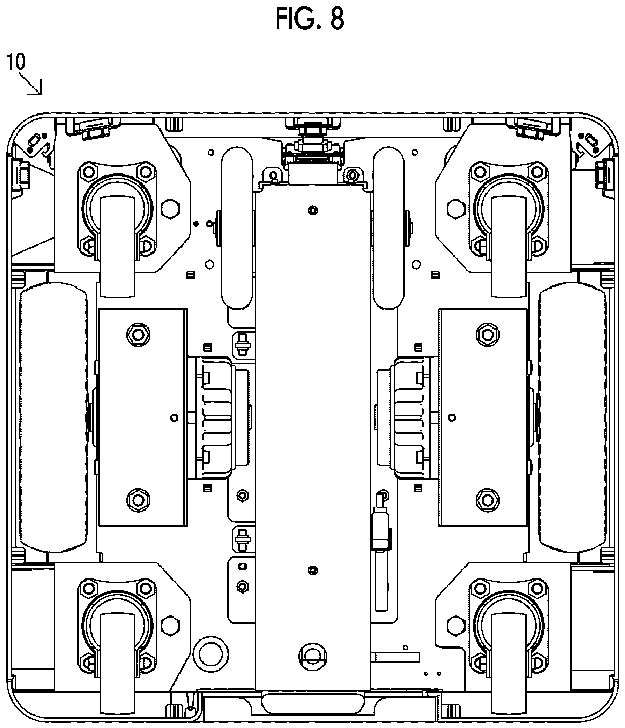

Refer to Figs. 1 to 9. Hereinafter, the outline of the autonomous bogie 10 (hereinafter, also referred to as an autonomous mobile robot (AMR)) of the embodiment will be described, and then the main features of the AMR 10 will be described. The AMR 10 is a type of distribution robot (autonomous mobile robot) that autonomously moves to a target place, and is also a type of unmanned transport vehicle. The AMR 10 includes a vehicle body 12, a plurality of wheels 14A to 14D, a wheel drive unit 16, a battery 18, a top plate 20, an emergency stop switch 22, an object detection sensor 24, an obstacle sensor 26, a camera 28, an operation button 30, a display 32, a shutdown button 34, and a door body 36.

A heat sink 38 is provided on an upper surface portion of the vehicle body 12. The heat sink 38 is disposed inside an opening portion provided in the upper surface portion of the vehicle body 12. The heat sink 38 is exposed in a gap space between the vehicle body 12 and the top plate 20. The heat sink 38 comes into contact with a part of electrical equipment (here, a circuit board 132 of a control unit 100 to be described later) disposed inside the vehicle body 12. The heat sink 38 receives the heat of the electrical equipment and dissipates the heat to the gap space. Accordingly, it is possible to avoid a temperature rise of the electrical equipment disposed inside the vehicle body 12. A speaker 40 is provided on the upper surface portion of the vehicle body 12. The speaker 40 is disposed at a position overlapping the opening portion provided on the upper surface portion of the vehicle body 12 in the vertical direction. The speaker 40 is exposed in a gap space between the vehicle body 12 and the top plate 20. The speaker 40 outputs audio to an external space around the AMR 10 through the gap space. The upper surface portion of the vehicle body 12 has a gentle mountain shape that is convex upward in the center. Accordingly, a waterproof effect can be exhibited.

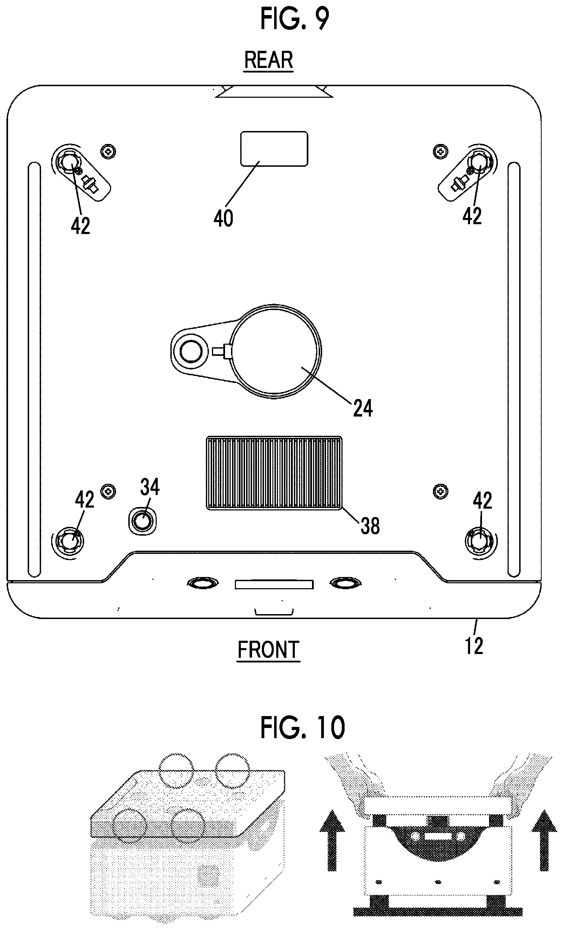

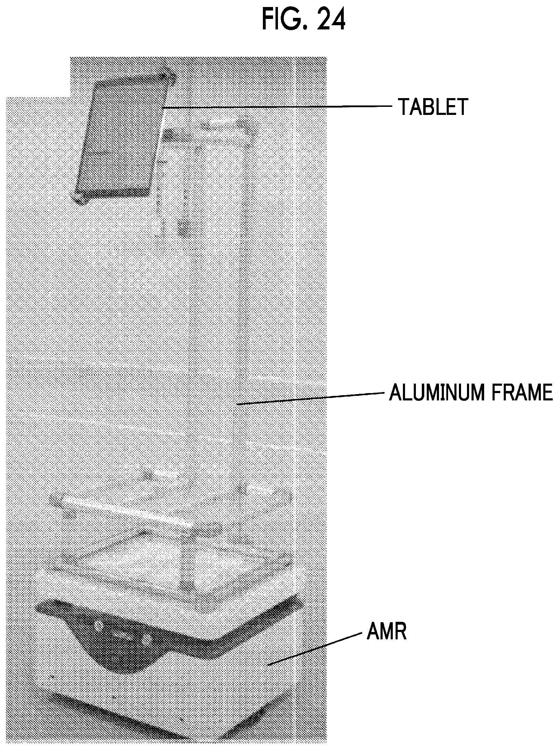

The top plate 20 is a place to place a load. The top plate 20 has a plurality of protrusions 52. This makes it difficult for the load to slip. The top plate has four recesses 54. A cushion rubber (not shown) can be attached to the recess 54. Accordingly, it is possible to improve grip on the load. The top plate 20 has a plurality of (eight in figures) mounting tapped holes 56. Various frames such as an aluminum frame can be easily mounted by being co-tightened with a screw member screwed into the mounting tapped hole 56 (see also Fig. 24). An obstacle detection and cliff detection sensor 58 is installed on the back side of the top plate 20. When carrying the AMR 10, two people face each other on the sides (o portions) of the top plate 20 and hold the AMR 10 with both hands (see Fig. 10). A recessed portion 60 that is recessed upward and backward is provided in an upper portion of a front surface portion of the vehicle body 12, and a panel portion 62 in which a button and a display are disposed is provided in the recessed portion 60. The sensor 58 on the back side of the top plate 20 is an optical sensor, and projects the detection light to pass through a portion recessed by the recessed portion 60. This allows for closer detection.

An emergency stop switch 22 is provided on a side surface portion of the vehicle body 12. When the emergency stop switch 22 is pressed, the supply of electric power (battery 18) to the wheel drive unit 16 is instantaneously cut off. Accordingly, the AMR 10 can be suddenly stopped while traveling.

An object detection sensor 24 is mounted on a central portion of the upper surface portion of the vehicle body 12. The object detection sensor 24 is, for example, Light Detection And Ranging (LiDAR). The object detection sensor 24 is used when creating a map or when performing autonomous driving. The object detection sensor 24 can detect an object to be detected within the detection range by receiving the reflected light of the detection light projected by the sensor 24. In the gap space between the vehicle body 12 and the top plate 20, the object detection sensor 24 projects the detection light into a range that extends radially around the object detection sensor 24. A shield that shields the detection light of the object detection sensor is provided in the gap space. The shield here is a pillar member 42 and a pillar insertion portion 146, which will be described later. The detection light can be projected onto the external space around the AMR 10 in a range other than the range shielded by the shield in the gap space. Accordingly, the detection range can be set as wide as possible around the vehicle body 12.

A total of five obstacle sensors 26 are mounted, that is three obstacle sensors 26 on the front surface portion of the vehicle body 12 and one obstacle sensor 26 on each of the pair of side surface portions. The obstacle sensor 26 is used in combination with the object detection sensor 24 to avoid an obstacle during autonomous driving. The obstacle sensor 26 is an optical sensor, and the optical axis of the detection light is directed upward by 5 degrees with respect to the horizontal plane.

The camera 28 is mounted on the front surface portion of the vehicle body 12. The camera 28 is used to detect a line trace or a two-dimensional marker. In the case of performing line trace, a line on the floor is read by the camera 28 and traced. For example, when moving with reference to the map read into the AMR 10, the line trace may be started, with reading the line as trigger. In the case of detecting the two-dimensional marker, the camera 28 reads the two-dimensional marker (two-dimensional code) on furniture such as shelves, fixtures, and the like in addition to floors and walls.

The operation button 30 is mounted on the front surface portion of the vehicle body 12. The operation button 30 is used for releasing an error or restarting.

The display 32 is mounted on the front surface portion of the vehicle body 12. The display 32 is used for displaying the status of the vehicle body 12, displaying the remaining battery level, and the like.

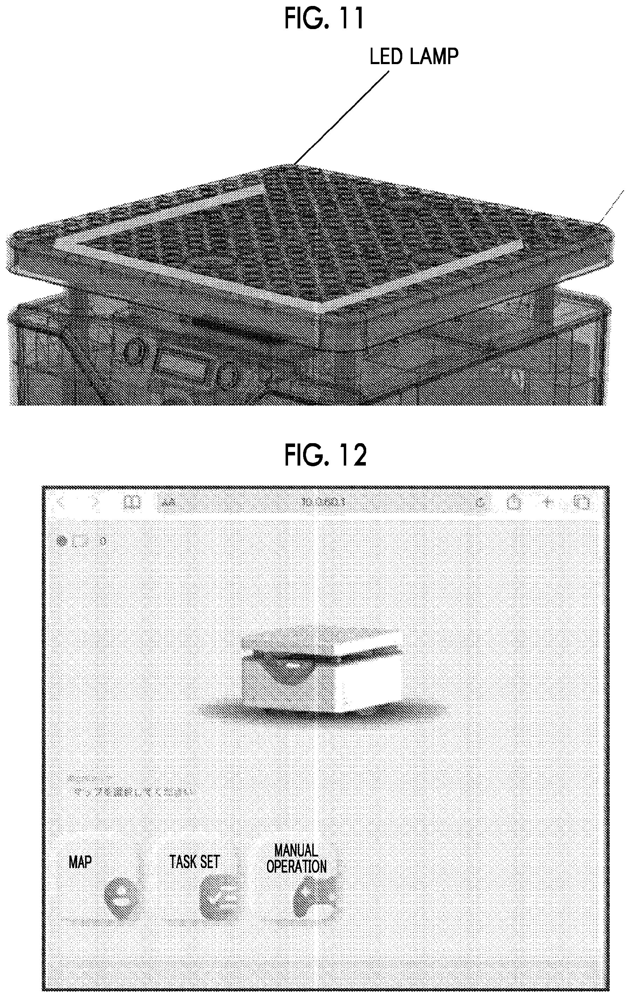

The LED lamp (also refer to Fig. 11) is disposed in a line shape along the outer periphery of the vehicle body 12. The LED lamp is mounted on the lower surface portion of the top plate 20. The status of the vehicle body 12 is displayed according to the color and lighting method. Green indicates a state of waiting for the operation to be received. Light blue indicates "while traveling". When changing course, the LED lamp lights up in the form of a blinker. The LED lamp turns deep blue while the map is being created. The LED lamp turns red when an error occurs.

A shutdown button 34 is mounted on the upper surface portion of the vehicle body 12. The shutdown button 34 is used before the power supply is turned off by the key switch 46.

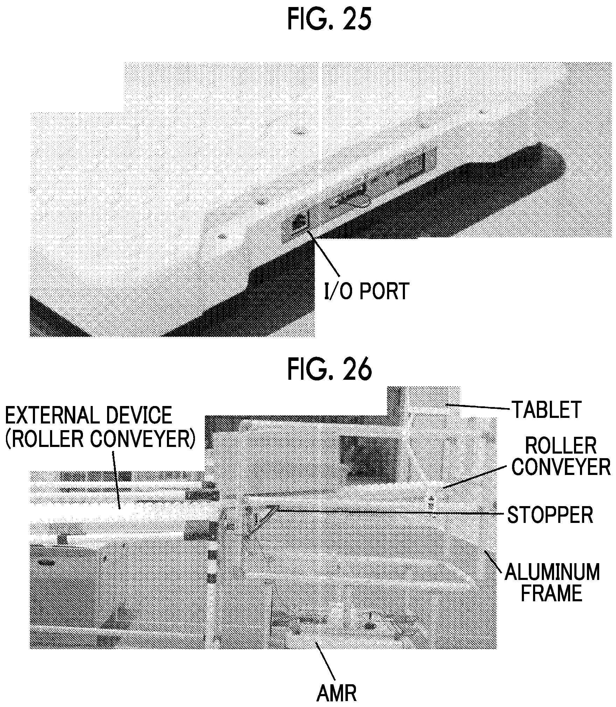

A traveling computer (a control unit 100 described later) that controls the traveling operation of the AMR 10 is mounted on the vehicle body 12 of the AMR, and an expansion function computer for expanding the functions of the AMR is mounted on the top plate 20. By accessing the expansion function computer, the function expansion can be easily realized according to the customer's application. The top plate 20 is provided with an I/O port (see also Fig. 25) for accessing the expansion function computer. The I/O port appears when the cover member 64 attached to the top plate 20 is removed. Since the same computer (for example, Raspberry Pi) is used, the traveling computer and the function expansion computer are inexpensive and have good expandability. Both the traveling computer and the function expansion computer may be provided only on either the top plate 20 or the vehicle body 12.

(Connection to Operation Screen) Refer to Fig. 12. A method of connecting to the operation screen of the AMR will be described. First, in an operation terminal such as a smartphone, a tablet, or a PC, the SSID of the AMR is selected on the Wi-Fi setting screen, and a predetermined password is input to connect the AMR and the operation terminal. Next, by activating the browser application and inputting a predetermined address in the address bar of the browser application, it is possible to access the address. When the address is accessed, the operation application is read, and when the operation application is successfully read, the operation screen (home screen) of Fig. 12 is displayed.

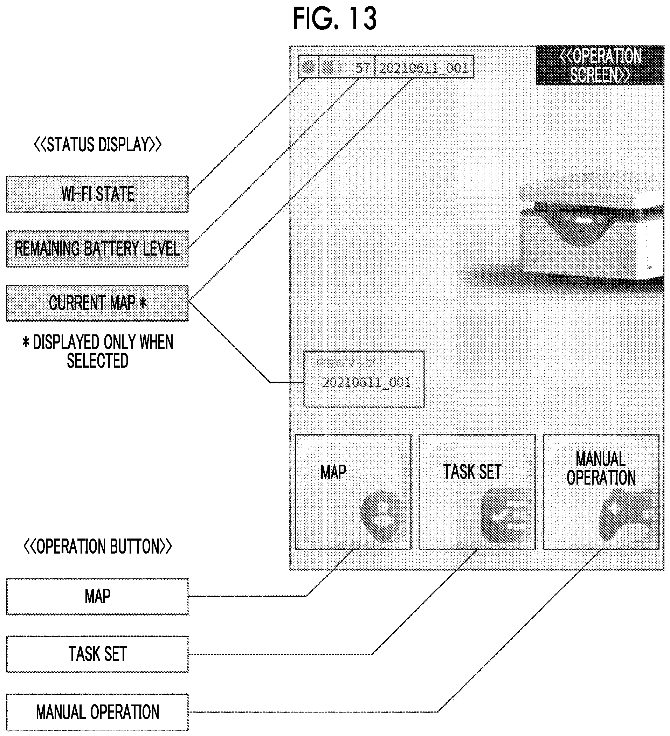

(Explanation of Operation Screen) Refer to Fig. 13. On the operation screen, the Wi-Fi state, the remaining battery level, and the current map (only when a map is selected) are displayed as the status of the AMR. A plurality of operation buttons for operating the AMR are displayed on the operation screen. By selecting any one of the plurality of operation buttons, a menu corresponding to the operation button can be opened. The plurality of operation buttons include a button for creating a map, a button for creating a task set, and a button for manual operation from the left side to the right side in Fig. 13. When the button for creating a map is selected, the mode for creating a map is executed. By making the AMR recognize the map created by using this, autonomous driving becomes possible. When the button for creating a task set is selected, the mode for creating a task set is executed. A task set is a collection of a task that moves to a designated position, a task that sets input/output of a GPIO port (digital input/output for cooperation between an external device and AMR), and the like, in which the tasks can be executed in order. The actual operation can be performed by playing the task set. In the task set, it is possible not only to move to the destination via a plurality of points but also to cooperate with other devices. When the button for manual operation is created, a joystick is displayed at the lower right of the screen of the operation terminal. By operating this joystick, the AMR can be manually moved.

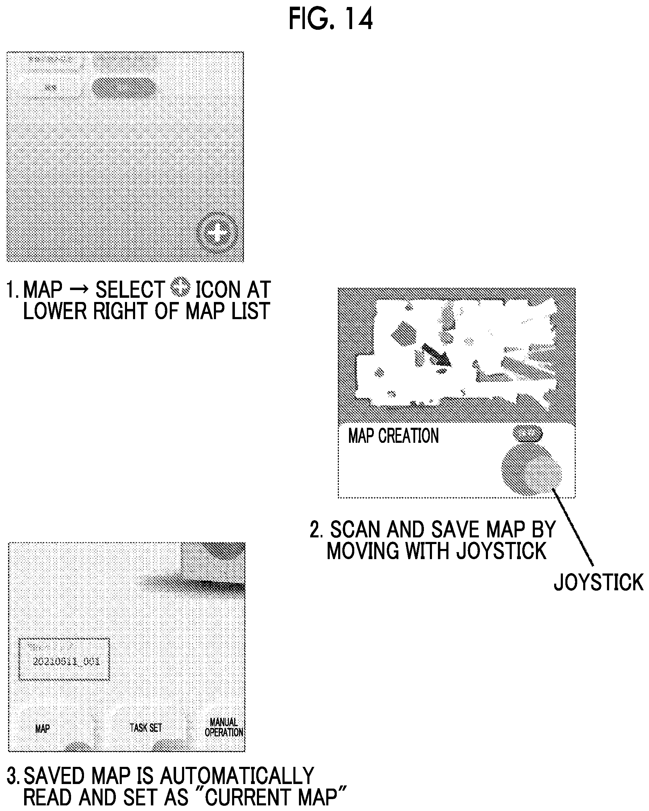

(Map Creation) Refer to Fig. 14. A mode for creating a map will be described. The map is essential for autonomous driving. First, the screen of "1." is displayed. A list of created maps is displayed on this screen. On this screen, the map can be read into the AMR, and the current position can be set, edited, and deleted. To create a new map, the + icon at the lower right of this screen is selected. Then, the screen of "2." is displayed. The AMR can be moved with the joystick on this screen. When the screen of "2." is displayed, the LED lamp of the AMR changes from green to deep blue. When the AMR is moved, the scanned area can be created as a map by the object detection sensor (LiDAR) of the AMR scanning the surroundings of the AMR. A map may be created by moving the AMR with a joystick to cover a range that is as large as possible than an actual operation range.

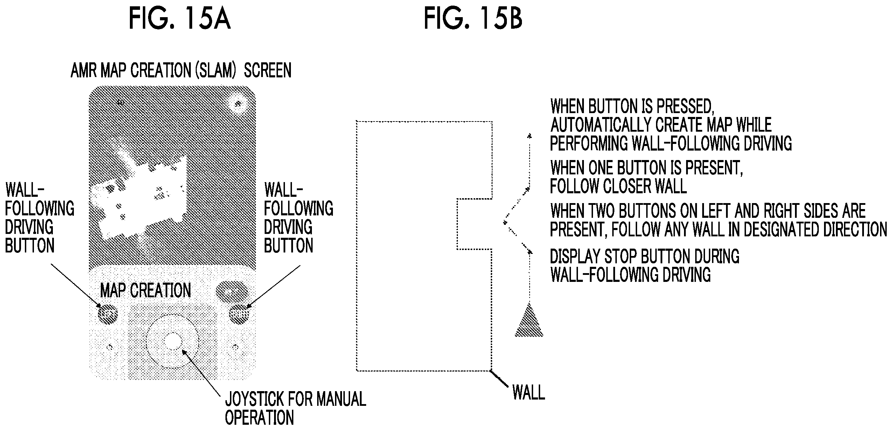

The created map can be saved by selecting the save button on the screen of "2." and inputting the map name. The saved map is automatically read, and selected as the "current map". Refer to Figs. 15A and 15B. Fig. 15A is another screen view displayed when the map is created. Fig. 15B is an explanatory diagram of the wall-following mode. When moving the AMR for scanning a map, it is possible to perform a wall-following mode in addition to the normal mode of moving the AMR with a joystick. The wall-following mode can be selected by pressing a wall-following driving button corresponding to the wall-following mode. Fig. 15A shows a left wall-following driving button and a right wall-following driving button. Each wall-following driving button is a button for wall-following driving along a wall present in the designated direction, with either the left direction or the right direction as viewed from the AMR as a designated direction. Only one wall-following driving button may be displayed without distinguishing between the left and right walls. In the wall-following mode, a map can be automatically created by scanning while performing wall-following driving. Accordingly, the map can be created without manually moving the AMR, and the burden on the user can be reduced. When there is only one wall-following driving button, the wall-following driving is performed along a wall which is a closer wall among walls on the left and right of the AMR. In a case where there are two wall-following driving buttons corresponding to the left and right as in Fig. 15A, the wall-following driving is performed along the wall present in the designated direction corresponding to the wall-following driving button. Fig. 15B shows an operation when a left wall-following driving button is selected, in a case where the wall is on the left side of the AMR. By selecting this button, the wall-following driving is performed along the wall in the left direction (designated direction corresponding to the button). During the wall-following driving, a stop button for stopping the wall-following driving may be displayed.

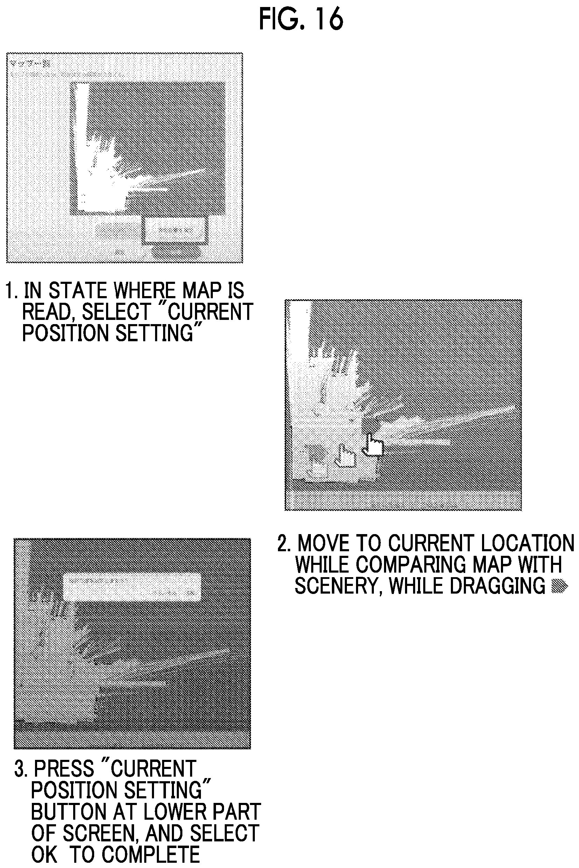

(Setting of Current Position) Refer to Fig. 16. A method of setting the current position on the created map will be described. When the map is changed, the AMR is moved with the power turned off, or the position is lost for some reason, it is necessary to set the current position. In order to set the current position, it is necessary to read the map into the AMR in advance. First, in a state where the created map is read, the "current position setting" displayed on the screen of "1." is selected. Then, since the icon of the AMR is displayed on the screen of "2.", the current position can be set by moving the icon to the current location while comparing the scenery with the map while dragging the icon. In this case, the direction of the AMR can also be set by rotating the icon of the AMR. After that, when the "Set current position" button at the bottom of the screen of "2." is pressed, a screen asking whether the setting of the current position is completed is displayed as in "3.", OK on the screen is selected. Accordingly, the setting of the current position is completed.

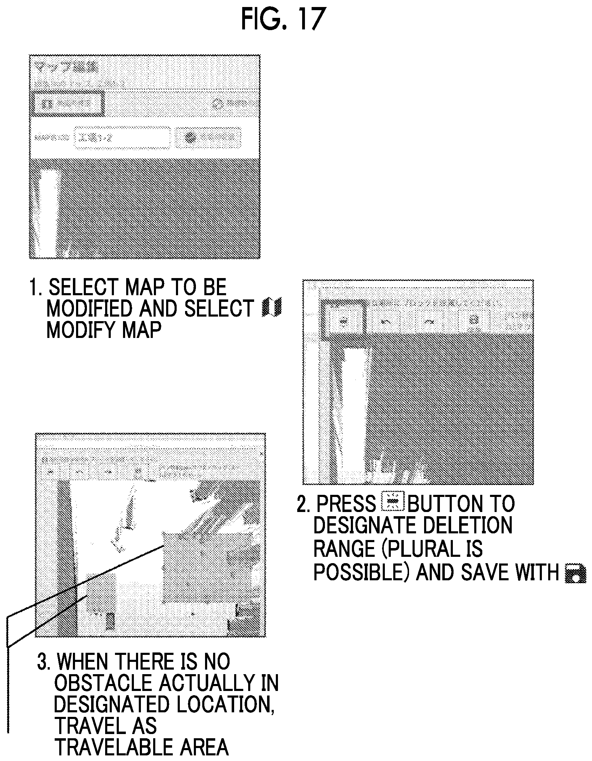

(Modification of Map Shape) Refer to Fig. 17. A method of modifying the map shape of the created map will be described. The map shape is modified to delete people or moving objects (such as bogies, loads, or moving shelves that are not normally used) from the map when the people or moving objects are reflected in the created map. The deleted area is recognized as a travelable area and is not used as a reference for self-positioning.

First, in a state where the map to be modified is selected, "Modify map" displayed on the screen of "1." is selected. Then, since the screen of "2." is displayed, the button displayed on the screen is pressed to designate the deletion range. A plurality of the deletion ranges can be designated. This deletion range can be enlarged or reduced by a pinch operation, or can be rotated by performing a predetermined operation.

The screen of "3." shows a state in which the deletion range is designated. After designating the deletion range, the save button is selected to save the map in which the deletion range is reflected. Accordingly, when there is no obstacle in the designated deletion range, the AMR recognizes the deletion range as the travelable area and can travel there.

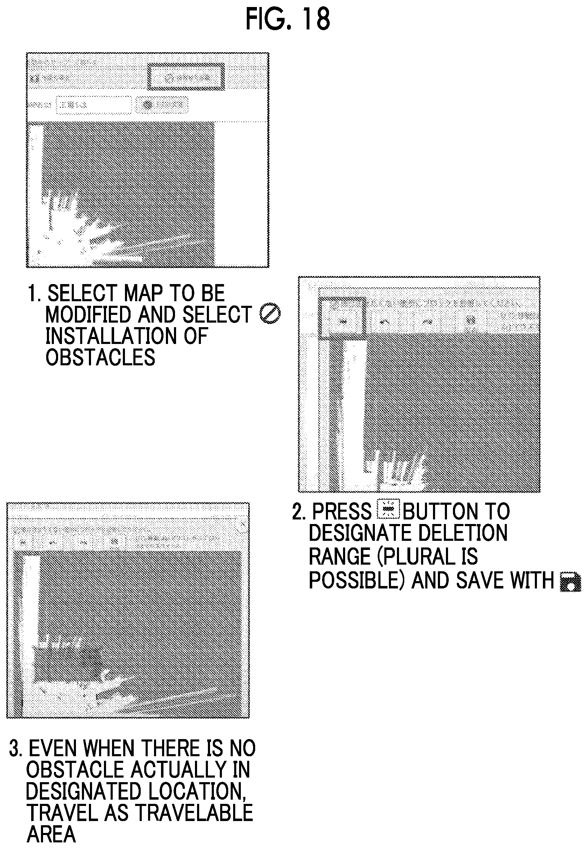

(Setting of no-travel area) Refer to Fig. 18. A method of setting a no-travel area will be described with respect to the created map. The no-travel area is recognized as an area where the AMR cannot enter. Accordingly, for safety reasons, it is possible to designate a place or the like where the vehicle is not allowed to travel. For example, since the AMR may pass under a desk or a shelf, it is preferable to set these as no-travel areas.

First, in a state where the map to be modified is selected, the "installation of obstacles" displayed on the screen of "1." is selected. Then, since the screen of "2." is displayed, the button displayed on the screen is pressed to designate the installation range. A plurality of the installation ranges can be designated. This installation range can be enlarged or reduced by a pinch operation, or can be rotated by performing a predetermined operation.

The screen of "3." shows a state in which the installation range is designated. After designating the installation range, the save button is selected to save the map in which the installation range is reflected. Accordingly, even when there is actually no obstacle at the designated location, the AMR recognizes the location as a no-travel area and cannot travel there.

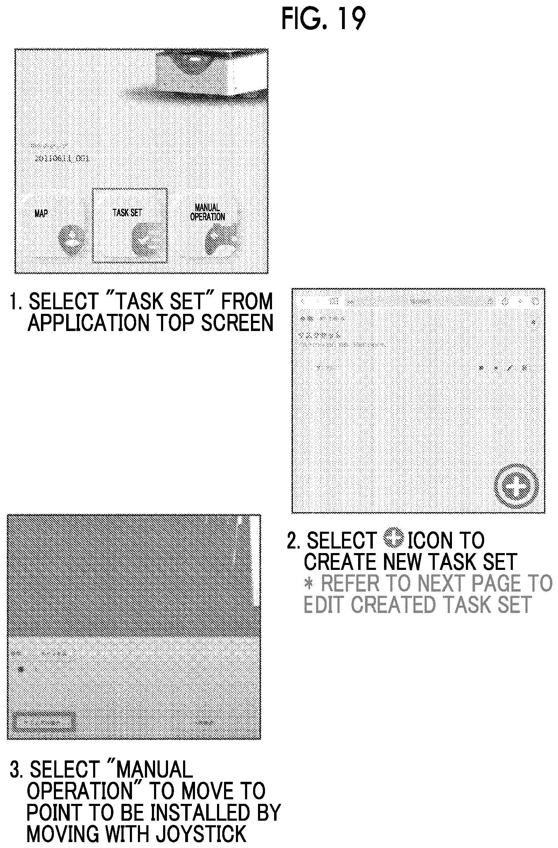

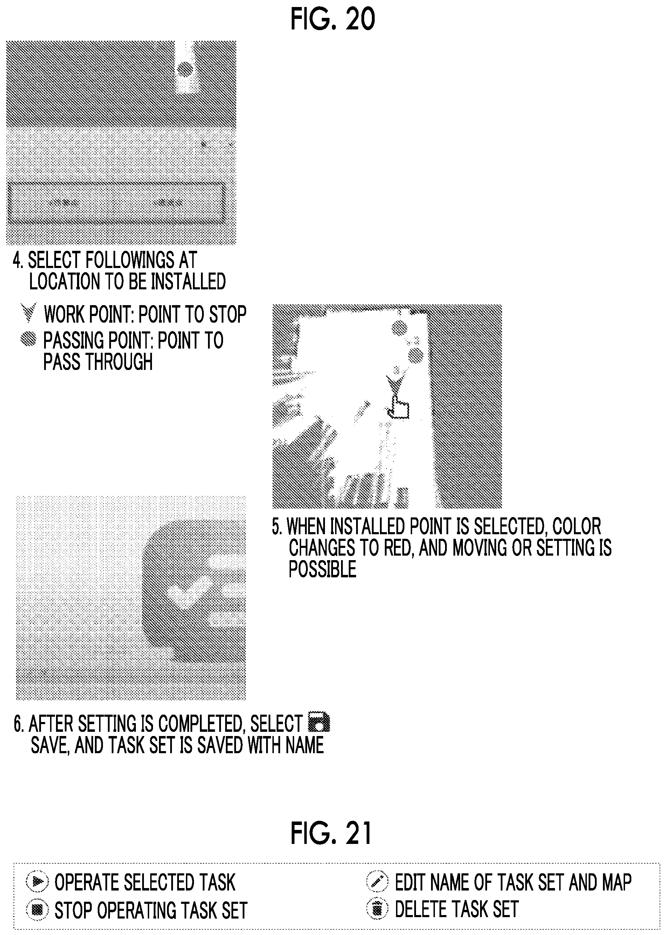

(Creation of Task Set) Next, a mode for creating a task set will be described. Refer to Figs. 19, 20, and 21. First, the "task set" is selected from the operation screen of "1.". Then, the screen of "2." is displayed. A list of created task sets is displayed on this screen. From this screen, in addition to creating a new task set, the task set can be played, edited, or deleted. When the + icon at the lower right of this screen is selected, the screen of "3." is displayed and a new task set can be created. The screen of "3." indicates a state in which "manual operation" is selected. In this case, it is possible to designate a point where a task is to be installed by moving the AMR to a point where the task is to be installed with a joystick (not shown). On the screen of "3.", after the point displayed on the screen of "3." (also refer to the screen of "4.")) is tapped to turn to an active state, the point is dragged to designate a point where the task is to be installed.

"4." indicates a state in which a point where the task is to be installed is designated. After designating the point where a task is to be installed, either the "work point" or the "passing point" is selected. A "work point" is a point at which the AMR is stopped, and a "passing point" is a point through which the AMR is passed. At the "work point", the direction of the AMR when the AMR is stopped can also be designated. At the "work point", another task such as output of the GPIO can be executed after the AMR is stopped.

When the "work point" and the "passing point" are selected, the color changes (for example, changes from blue to red) as in the screen of "5.". The point where this task is installed can be moved or set in other ways. After the setting for installing the task is completed, save, is selected, and the task set is saved with a name, as shown in the screen of "6.".

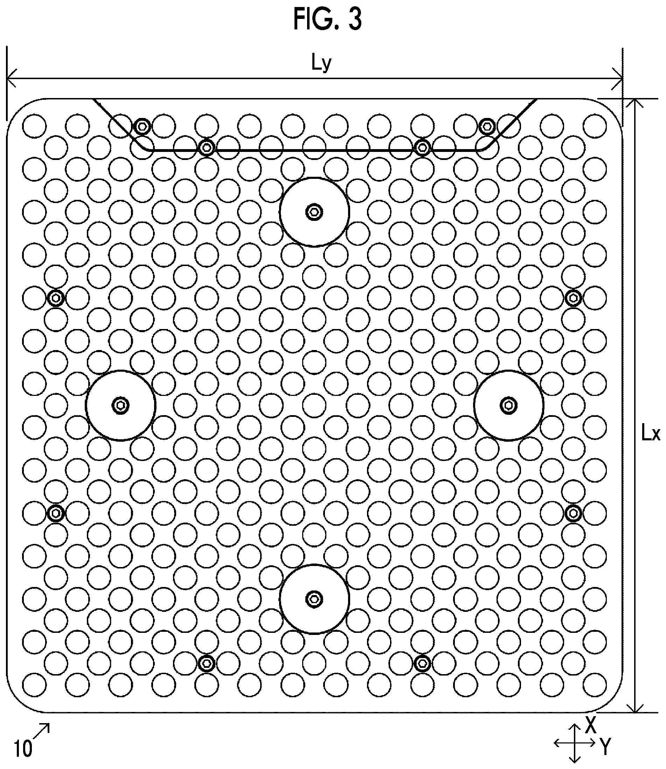

A list of the created task sets is displayed on the screen of "2.". The function of the button displayed on the right side of the task set on the screen of "2." is shown in Fig. 3K3. By pressing the play button on the screen of "2.", the created task set can be played. It is also possible to stop playing the task set by pressing the stop button on the screen of "2.". It is desirable to perform a trial driving by playing the created task set. In the case of entering an unintended route in the trial driving, it is advisable to set the no-travel area by using the map editing function. When an unintended operation is performed in the trial driving, the task may be adjusted by using a task set editing function. The adjustment by the map or task set editing function may be repeated until the intended operation can be performed in the trial driving.

In an actual operation, the URL is accessed by inputting a predetermined URL in the address bar of the browser application. When the URL is accessed and the application is read, the buttons of the created task set are displayed in a list based on the set map. Favorite attributes can be attached to the task set. Only favorite task sets can be displayed by using a filter. When the task set button is pressed, the task set is played and the actual operation can be checked.

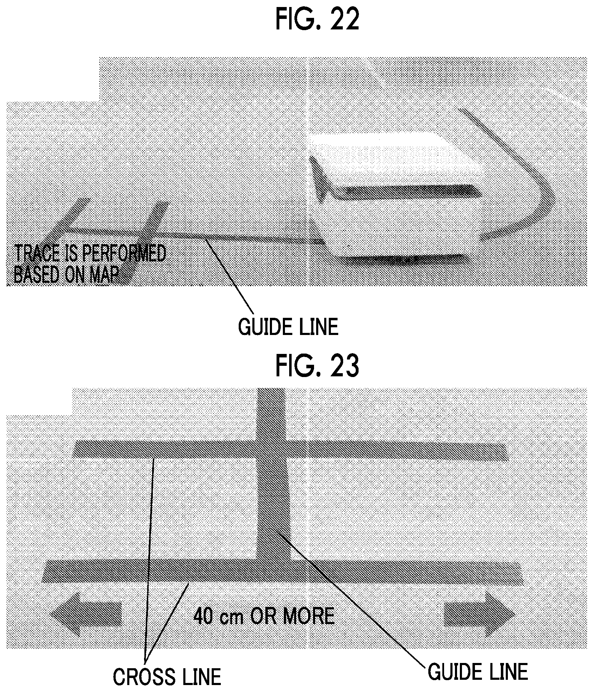

Refer to Figs. 22 and 23. The tasks that can be set in the task set include a line trace. As a preliminary preparation, a special line tape for guide is pasted on the floor. A cross line is made to stop the line trace. Two cross lines are made to be perpendicular to the guide line. The cross line is 40 cm or more, and the two cross lines are 20 cm or more and 30 cm or less. When creating a task set, a guide line is designated as the point where a task is to be installed, and the above-described "work point" is selected. At the same time, the line trace is selected as the task and the cross line is selected as the stop condition. When the task set including the task created in this manner is played, the autonomous driving using the map can be performed until the designated work point is reached, and the line trace task can be performed after the work point is reached. When the line trace task is performed, it can travel along the guide line and stop at the cross line.

Refer to Figs. 24 and 25. Next, a custom method of the AMR will be described. Here, a custom method for causing the AMR to function as a transport robot for picking equipped with a tablet will be described. First, a bolt (not shown) fastened to the mounting tapped hole of the top plate is removed. Next, the prepared frame is attached with bolts. The I/O port can be accessed by removing the cover member attached to the top plate. From left to right, the I/O ports are a LAN port, an emergency cutoff switch port, a GPIO port, a USB Type-C 5V constant output port and a relay output port, and a battery voltage constant output port and a relay output port. For example, by connecting a power cable of the tablet to a USB Type-C constant output port, power can be extracted from the AMR to the tablet.

Refer to Fig. 26. Other custom examples of the AMR will be described. Here, an example in which a roller conveyor and an electric stopper are further attached to the aluminum frame of the above-described transport robot will be shown. The electric stopper is movable between a load restriction position that restricts the movement of the load on the roller conveyor in the transport direction and a restriction release position that allows the movement. When the load is loaded on the roller conveyor of the AMR, the electric stopper is positioned at the load restriction position. After the AMR moves to a position where the load can be delivered to another roller conveyor as an external device, the AMR moves the electric stopper from the load restriction position to the restriction release position (position shown in Fig. 26). Accordingly, the load on the roller conveyor is transported to the roller conveyor of the external device. The movement up to this point can be implemented by creating the task set described above.

(Autonomous mobile robot that can be used quickly and easily) It is possible to start the setup quickly using the application from the smartphone or tablet on hand. The map and task can also be intuitively set using the application, so it is possible to quickly respond to changes in layout and work content.

(Automatically avoiding obstacles) The AMR adopts SLAM technology to perform high-speed map creation and self-positioning. It is equipped with a LiDAR (laser scanner) and a plurality of obstacle sensors, and can carry a load while automatically avoiding people and obstacles.

(Compatible with line trace) Not only guideless driving in which a map is created and autonomous movement is performed, but also highly accurate traveling by line trace (following a line on the floor surface) by a camera is possible. Since an inexpensive line tape is used, the initial investment at the site can be suppressed as compared with the case of a general magnetic tape.

(Sophisticated design) The AMR is a collaborative robot that can be used quickly and easily and works with people. Although the AMR is for industrial use, the AMR has a user-friendly and beautiful design.

(Creating custom robot) AMR is expected to be equipped with various devices. An aluminum frame or the like can be easily attached to a plurality of mounting tapped holes on the top plate. A 24V (battery voltage)/5V power outlet, a shutdown switch, a GPIO, a LAN port, and Wifi (registered trademark) can also be used. Scale-up such as group control by a plurality of AMRs is also possible. The AMR can contribute to automation in various places such as factories, logistics, and restaurants.

Next, individual features of the AMR 10 of the embodiment will be described. Hereinafter, (1) a feature relating to the partition member 108 of the vehicle body 12, (2) a feature relating to the wheels 14A to 14D, and (3) a feature relating to the power supply 197 will be described in this order. First, an explanation will be made from the feature relating to the partition member 108 of (1) .

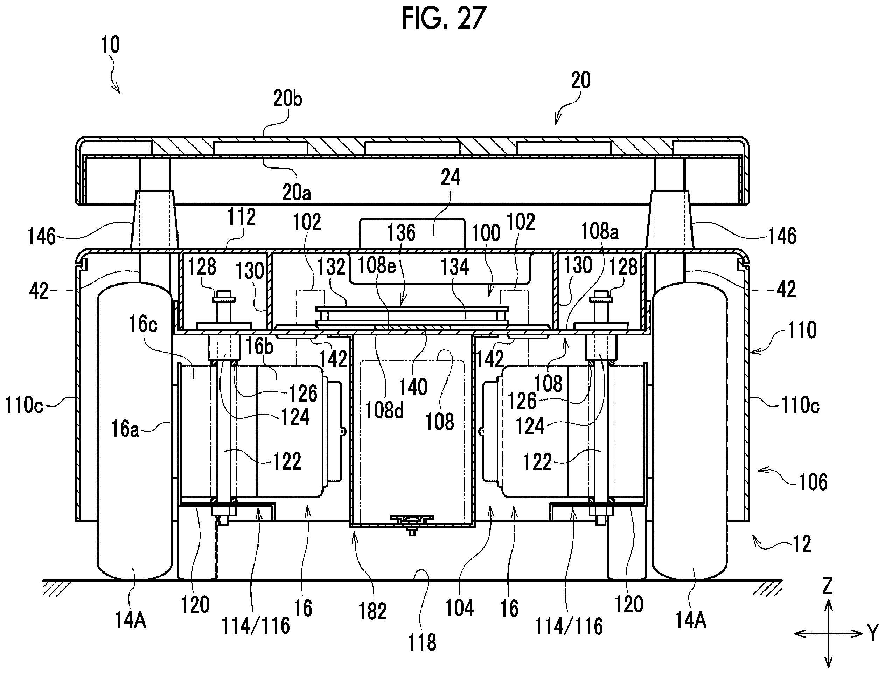

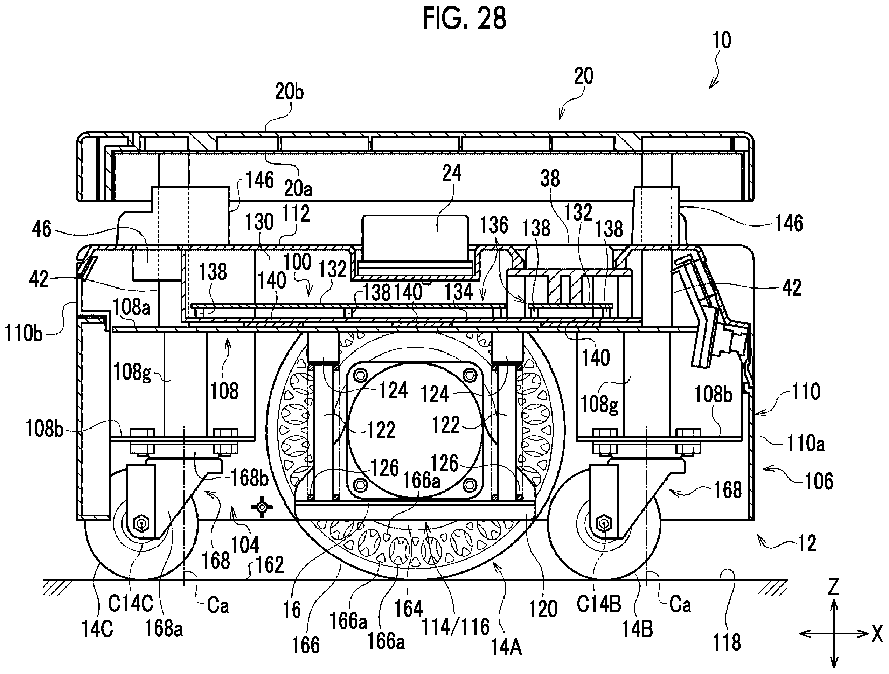

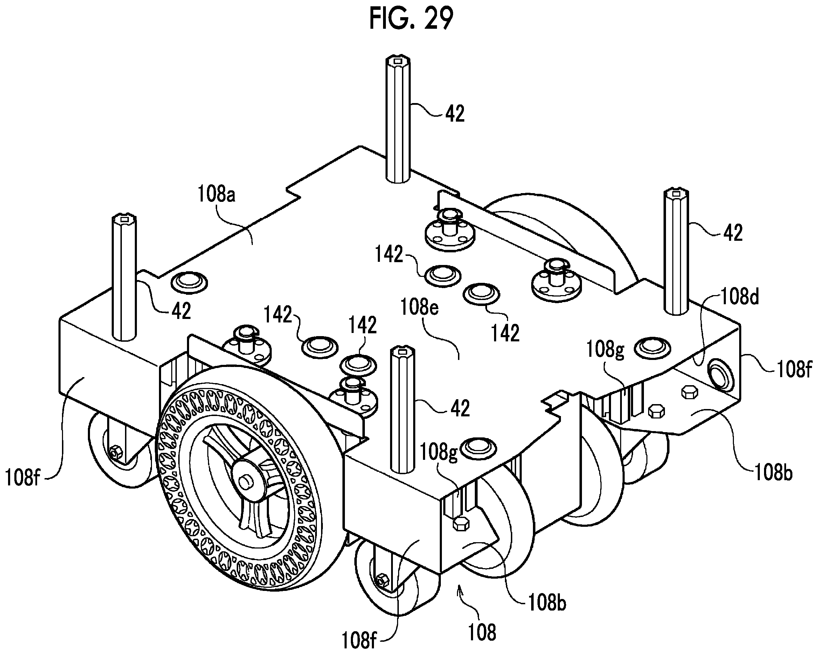

Refer to Figs. 27, 28, and 29. In Fig. 28, the battery 18, the battery holder 182, and the like, which will be described later, will be omitted. Hereinafter, the positional relationship between components will be described by using the front-rear direction X, the left-right direction Y, and the vertical direction Z. The AMR 10 includes a control unit 100, and a cable 102 that connects the wheel drive unit 16 and the control unit 100, in addition to the vehicle body 12 and the wheel drive unit 16 described above.

The vehicle body 12 includes a vehicle body housing 106 that forms the vehicle body internal space 104, and a partition member 108 that vertically partitions the vehicle body internal space 104. The partition member 108 is provided on the vehicle body 12 as a part of the vehicle body 12.

The vehicle body housing 106 has a box shape that is open downward as a whole. The vehicle body housing 106 includes an outer peripheral wall portion 110 that surrounds the vehicle body internal space 104 from the front, rear, left, and right sides, and an upper wall portion 112 that covers the vehicle body internal space 104 from above. The outer peripheral wall portion 110 includes a front wall portion 110a forming a front surface portion of the vehicle body 12, a rear wall portion 110b forming a rear surface portion of the vehicle body 12, and a pair of side wall portions 110c forming left and right side surface portions of the vehicle body 12. The outer peripheral wall portion 110 is attached to the partition member 108 by using a screw or the like. The upper wall portion 112 forms the upper surface portion of the vehicle body 12. The upper wall portion 112 is formed separately from the outer peripheral wall portion 110, and is placed on the outer peripheral wall portion 110 from above. The upper wall portion 112 is attached to the partition member 108 by using a screw or the like.

The partition member 108 serves as a base of the vehicle body 12 that supports the vehicle body housing 106, the top plate 20, and the like. The partition member 108 includes a partition plate portion 108a that vertically partitions the vehicle body internal space 104, and a plurality of wheel mounting portions 108b which are connected to the partition plate portion 108a and to which driven wheels 14B and 14C (described later) are attached. In the present embodiment, the partition plate portion 108a and the plurality of wheel mounting portions 108b of the partition member 108 are integrally molded using the same member, but may be configured by using individual members. The partition member 108 includes a lower surface 108d of the partition plate portion 108a that faces downward when the AMR 10 travels, and an upper surface 108e of the partition plate portion 108a that faces upward when the AMR 10 travels.

The wheel mounting portions 108b are individually provided for the plurality of driven wheels 14B and 14C (described later). The wheel mounting portions 108b are disposed at positions spaced downward with respect to the partition plate portion 108a. The wheel mounting portions 108b are connected to the partition plate portion 108a via a connection plate portion 108f extending downward from the partition plate portion 108a. A first spacer 108g is attached between the partition plate portion 108a and the wheel mounting portions 108b to maintain a gap therebetween.

The AMR 10 includes a pair of left and right wheel drive units 16 that are disposed at intervals in the left-right direction Y. The wheel drive unit 16 is disposed on the lower surface 108d side (lower side of the partition plate portion 108a) of the partition member 108. The pair of wheel drive units 16 are individually provided to correspond to the pair of main wheels 14A to be described later, and drive the corresponding main wheels 14A to rotate. The wheel drive unit 16 of the present embodiment is a gear motor, but specific examples thereof are not particularly limited, and may be a motor, an engine, or the like. The wheel drive unit 16 includes an output member 16a to which the main wheels 14A are fixed and the rotation is output to the main wheels 14A. In addition to this, the wheel drive unit 16 includes a motor 16b, and a speed reducer 16c that decelerates the rotation input from the motor 16b and then outputs the rotation from the output member 16a to the main wheels 14A.

The pair of left and right main wheels 14A and the wheel drive units 16 are attached to the vehicle body 12 by using individual main wheel attachment mechanisms 114. The main wheel attachment mechanism 114 of the present embodiment is a suspension mechanism 116. The suspension mechanism 116 includes a fixed frame 120 to which the wheel drive unit 16 is fixed, a shaft 122 fixed to the fixed frame 120, a linear motion bearing 124 fixed to the vehicle body 12 to support a shaft 122 to be able to move up and down, and a biasing member 126 that biases the fixed frame 120 downward. When the shaft 122, the linear motion bearing 124, and the biasing member 126 are made into one component unit, the suspension mechanism 116 of the present embodiment includes a plurality of (here, two) component units. The shaft 122 of each component unit is fixed to a common fixed frame 120.

The linear motion bearing 124 is, for example, a ball spline or the like. The linear motion bearing 124 is fixed to the partition plate portion 108a of the partition member 108 which is a part of the vehicle body 12. Since the upper end portion of the shaft 122 is inserted into the linear motion bearing 124, a retaining member 128 such as a snap ring restricts downward displacement from the linear motion bearing 124. Accordingly, the suspension mechanism 116 attaches the main wheels 14A and the wheel drive unit 16 to the vehicle body 12 to be movable up and down within a movable range. The lower limit position of the movable range of the main wheels 14A with respect to the vehicle body 12 is a position where the disconnection of the shaft 122 is restricted by the retaining member 128.

The biasing member 126 is, for example, a coil spring through which the shaft 122 is inserted. The biasing member 126 of the present embodiment is disposed between the fixed frame 120 and the vehicle body 12, but may be disposed above the partition member 108 of the vehicle body 12.

The disposition space of the upper end portion of the shaft 122 that is a movable member on the upper surface 108e side of the partition member 108 and the disposition space of the control unit 100 are partitioned by a partition member 130. Accordingly, interference between the movable member and the cable 102 disposed in the disposition space of the control unit 100 can be avoided. The partition member 130 of the present embodiment is provided integrally with a part of the vehicle body 12 to protrude downward from the upper wall portion 112 of the vehicle body housing 106. In addition to this, the partition member 130 may be provided separately from the vehicle body 12.

The control unit 100 is disposed on the upper surface 108e side (upper side of the partition plate portion 108a) of the partition member 108 and is attached to the partition member 108. The control unit 100 is used to control the operation of the AMR 10.

The control unit 100 includes a circuit board 132 on which a control element (not shown) such as a microcomputer for controlling the operation of the AMR 10 is mounted, and a support member 134 that supports the circuit board 132. The control unit 100 of the present embodiment includes two circuit boards 132. The circuit board 132 functions as a control unit 136 that controls the operation of the bogie. Although not shown, the circuit board 132 as the control unit 136 includes a CPU that executes arithmetic processing, a ROM that stores various types of data, a RAM that is used as a work area, and the like. In addition to this, the circuit board 132 includes a power supply circuit that generates output power to be supplied to another electrical equipment from the input power supplied from the power supply 197 (battery 18). Here, the other electrical equipment refers to electrical equipment other than the circuit board 132 and the battery 18, and refers to an object detection sensor 24, an obstacle sensor 26, a camera 28, a display 32, and the like.

The support member 134 is formed of, for example, a molded product using a plate material or the like. The support member 134 of the present embodiment supports the heat sink 38 and the speaker 40, which are a part of the control unit 100, in addition to the circuit board 132. A second spacer 138 that maintains a gap between the circuit board 132 and the support member 134 is disposed between the circuit board 132 and the support member 134. The circuit board 132 is attached to the support member 134 using a screw inserted through the second spacer 138.

The control unit 100 is attached to the partition member 108 via a vibration-proof material 140. The vibration-proof material 140 is, for example, a sheet material formed by using an elastic body such as rubber. The vibration-proof material 140 absorbs the vibration applied to the partition member 108, thereby reducing the vibration transmitted from the partition member 108 to the control unit 100. The vibration-proof material 140 is disposed between the control unit 100 and the partition member 108. The control unit 100 of the present embodiment is attached to the partition member 108 via the vibration-proof material 140 by attaching the vibration-proof material 140 to the control unit 100 and the partition member 108 by adhesion. An attachment mode of the control unit 100 using the vibration-proof material 140 is not particularly limited. This attachment mode may be achieved, for example, by pressing the control unit 100 and the vibration-proof material 140 against the partition member 108 by a pressing force of a screw, or the like.

The cables 102 are individually provided corresponding to the pair of wheel drive units 16. In Fig. 27, only the center line of the cable 102 is shown. The cable 102 is attached to a connector (not shown) provided on the circuit board 132. The circuit board 132 controls the operation of the wheel drive unit 16 by transmitting electric power, a signal, or the like with the wheel drive unit 16 through the cable 102.

A grommet 142 is attached to the partition plate portion 108a of the partition member 108. The cable 102 is inserted into a cable hole (not shown) of the grommet 142 to be disposed vertically across the partition member 108. The grommet 142 is individually provided corresponding to a plurality of cables 102, and the corresponding cables 102 are inserted therethrough. In addition to this, in order to dispose the partition member 108 across the upper and lower parts, a cable hole through which the cable 102 is inserted may be provided in the partition plate portion 108a of the partition member 108.

The AMR 10 includes a plurality of pillar members 42 that rise upward from the partition plate portion 108a of the partition member 108 and support the top plate 20. The plurality of pillar members 42 are attached to the partition member 108 by using screws or the like. In the present embodiment, a total of four pillar members 42 are attached to locations near the corners of the four circumferences of the partition plate portion 108a of the partition member 108. The upper wall portion 112 of the vehicle body housing 106 includes a pillar insertion portion 146 that protrudes upward from the upper wall portion 112 and through which the pillar member 42 is inserted.

The top plate 20 includes a base member 20a, and an exterior member 20b that covers the base member 20a and forms a design surface of the top plate 20. The base member 20a is abutted against upper end portions of the plurality of pillar members 42, and is attached to the pillar member 42 by using a screw or the like. The exterior member 20b is attached to the base member 20a by using a screw or the like.

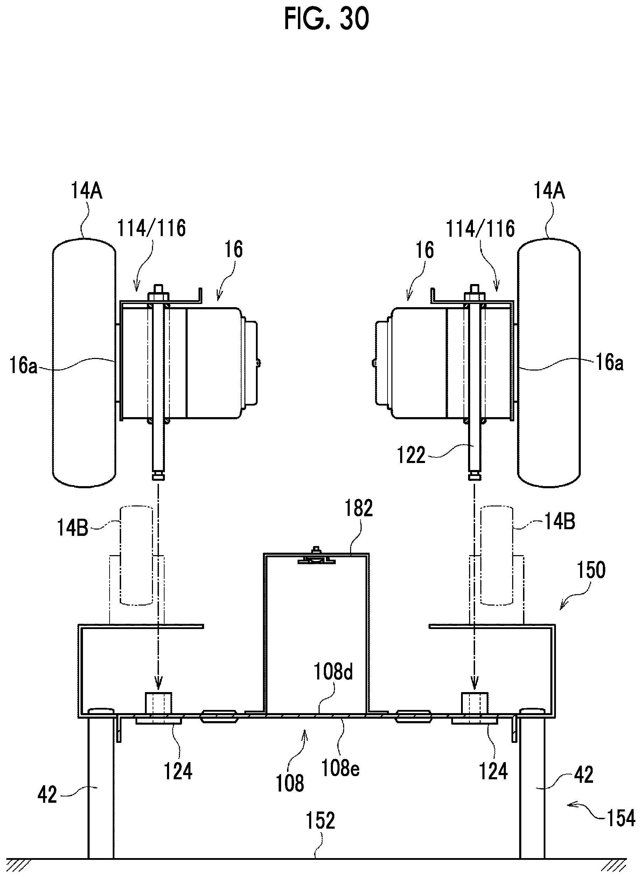

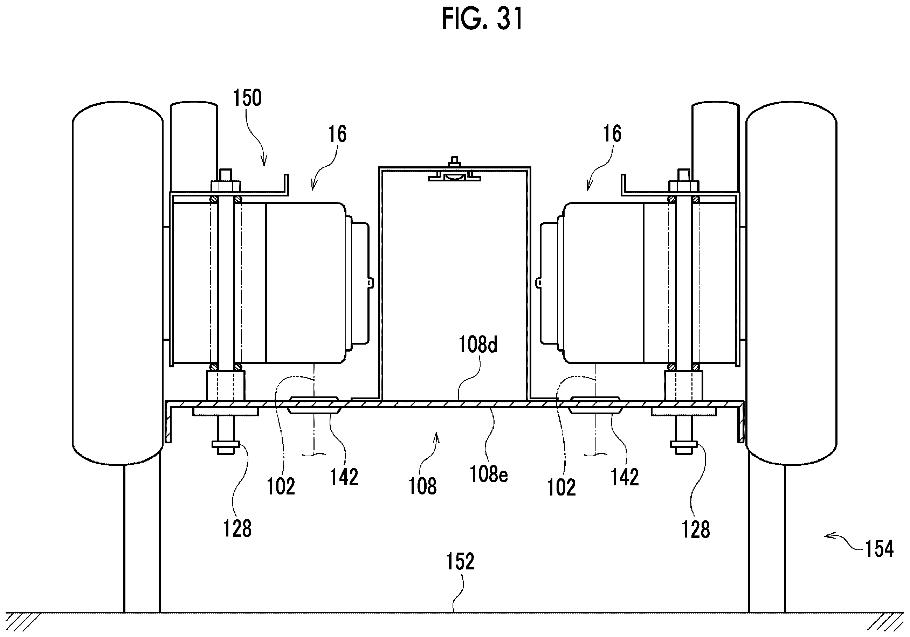

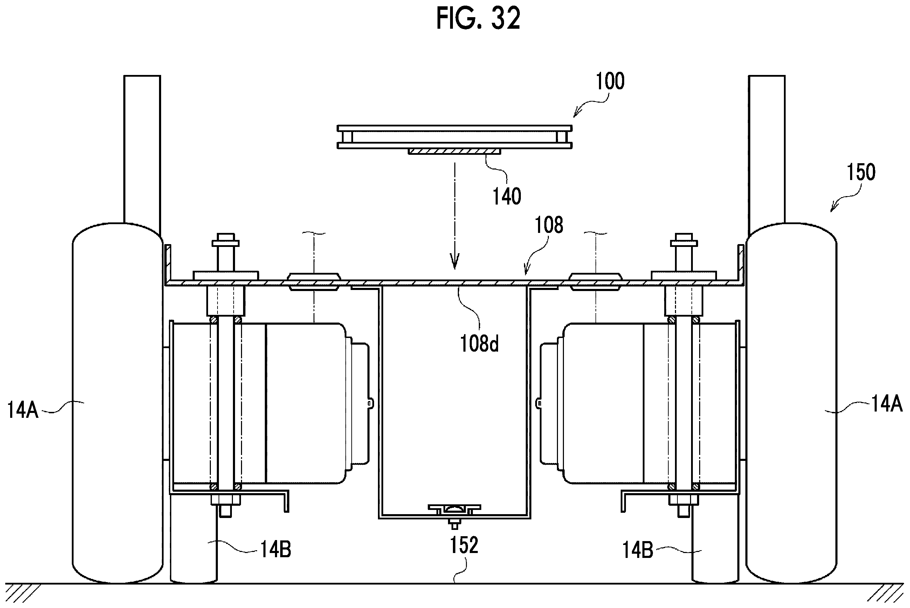

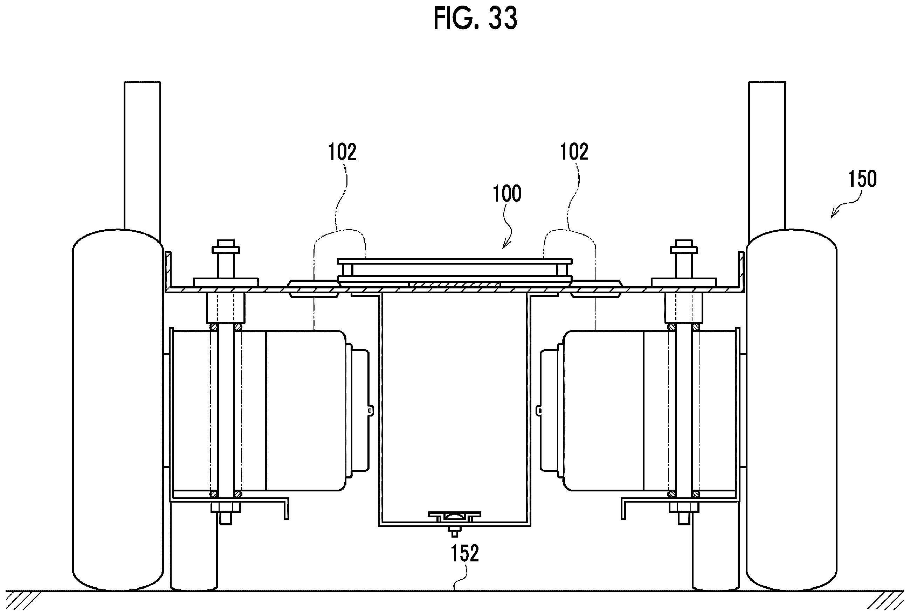

An example of the above assembly method of the AMR 10 will be described. The assembly method includes a first unit attachment process (refer to Fig. 30) of attaching the wheel drive unit 16 to the lower surface 108d side of the partition member 108, and a second unit attachment process (refer to Fig. 32) of attaching the control unit 100 to the upper surface 108e side of the partition member 108. In addition to this, the assembly method includes a first connection process of connecting the wheel drive unit 16 and the control unit 100 by a cable 102. The first connection process includes a first sub-connection process of attaching the cable 102 to the wheel drive unit 16 and a second sub-connection process (refer to Fig. 31) of disposing the cable 102 across the partition member 108. In addition to this, the first connection process includes a third sub-connection process (refer to Fig. 33) of attaching the cable 102 to the control unit 100.

Refer to Fig. 30. The first unit attachment process is performed in a state where the assembly 150 including the partition member 108 is placed on the work surface 152 on which the article is placed. The assembly 150 is placed on the work surface 152 with the lower surface 108d of the partition member 108 facing upward. The assembly 150 includes a plurality of pillar members 42 attached to the partition member 108, and the plurality of pillar members 42 are placed on the work surface 152. Accordingly, a space 154 can be secured between the upper surface 108e of the partition plate portion 108a of the partition member 108 and the work surface 152. With the space 154, it is possible to avoid putting a worker's hand in the space 154 or interference between the control unit 100 and the work surface 152, which will be described later, and it is possible to improve workability.

In the first unit attachment process, the wheel drive unit 16 is attached to the partition member 108 by using the main wheel attachment mechanism 114 (suspension mechanism 116). In order to achieve this, in the present embodiment, the shaft 122 of the main wheel attachment mechanism 114 is inserted into the linear motion bearing 124 fixed to the partition member 108, and the retaining member 128 (not shown) is attached to the shaft 122. Further, an example is shown in which the battery holder 182 is attached to the partition member 108 before the first unit attachment process, but the battery holder 182 may be attached to the partition member 108 after the first unit attachment process. Further, here, an example is shown in which the driven wheels 14B and 14C are attached to the partition member 108 before the first unit attachment process, but the driven wheels 14B and 14C may be attached to the partition member 108 after the first unit attachment process. Further, an example is shown in which the main wheels 14A are fixed to the output member 16a of the wheel drive unit 16 before the first unit attachment process, but the main wheels 14A may be fixed to the wheel drive unit 16 after the first unit attachment process.

Refer to Fig. 31. Before, after, or during the first unit attachment process, a first sub-connection process of attaching the cable 102 to the wheel drive unit 16 is performed. Accordingly, the second sub-connection process in which the cable 102 is disposed across the partition member 108 can be performed while the assembly 150 used in the first unit attachment process is placed on the work surface 152. In this second sub-connection process, the cable 102 is pulled out to the upper surface 108e side of the partition member 108 through the corresponding grommet 142 of the partition member 108. In this case, since the space 154 can be secured between the partition member 108 and the work surface 152, it is possible to obtain good workability when the cable 102 is pulled out by putting a worker's hand in the space 154.

Refer to Fig. 32. The second unit attachment process is performed in a state where the lower surface 108d of the partition member 108 faces downward and the assembly 150 including the partition member 108 is placed on the work surface 152. The assembly 150 includes a pair of main wheels 14A attached to the partition member 108 via the wheel drive unit 16, and a plurality of driven wheels 14B and 14C attached to the partition member 108. In the assembly 150, the plurality of main wheels 14A and the plurality of driven wheels 14B and 14C are placed on the work surface 152. As described above, the control unit 100 of the present embodiment is attached to the partition member 108 via the vibration-proof material 140.

Refer to Fig. 33. After that, following the second unit attachment process, a third sub-connection process of attaching the cable 102 to the connector of the control unit 100 is performed while the assembly 150 used in the second unit attachment process is placed on the work surface 152.

After the first and second unit attachment processes and the first connection process described above are completed, a second connection process of connecting other electrical equipment used for the AMR 10 by using a cable (not shown) is performed. After the second connection process is completed, the vehicle body housing 106 is attached to the partition member 108. Subsequently, the base member 20a of the top plate 20 is attached to the pillar member 42 previously attached to the partition member 108, and subsequently, the exterior member 20b of the top plate 20 is attached to the base member 20a. Accordingly, the assembling of the AMR 10 is completed.

The effects relating to the above feature (1) will be described. The wheel drive unit 16 is disposed on the lower surface 108d side of the partition member 108, and the control unit 100 is disposed on the upper surface 108e side of the partition member 108. Therefore, as compared with the case where both the wheel drive unit 16 and the control unit 100 are disposed on the lower surface 108d side of the partition member 108, it becomes easier to secure the disposition space of the individual units on both the upper and lower sides of the partition member 108. As a result, the wheel drive unit 16 and the control unit 100 can be attached to the partition member 108 while avoiding interference between the wheel drive unit 16 and the control unit 100, and good workability can be obtained when the AMR 10 is assembled. In addition, when during maintenance of one of the wheel drive unit 16 and the control unit 100, contact with the other can be avoided, and good workability can be obtained even during maintenance.

The order of the first and second unit attachment processes is not particularly limited. The second unit attachment process and the first unit attachment process may be performed in this order. In this case, after the second unit attachment process, with the lower surface 108d of the partition member 108 facing downward, a third sub-connection process of attaching the cable 102 to the control unit 100 and a second sub-connection process of disposing the cable 102 across the partition member 108 may be performed. In this case, after the first unit attachment process, with the upper surface 108e of the partition member 108 facing downward, the first sub-connection process of attaching the cable 102 to the wheel drive unit 16 may be performed. In this case, by securing a space 154 between the upper surface 108e of the partition member 108 and the work surface 152, interference between the control unit 100 and the work surface 152 can be avoided.

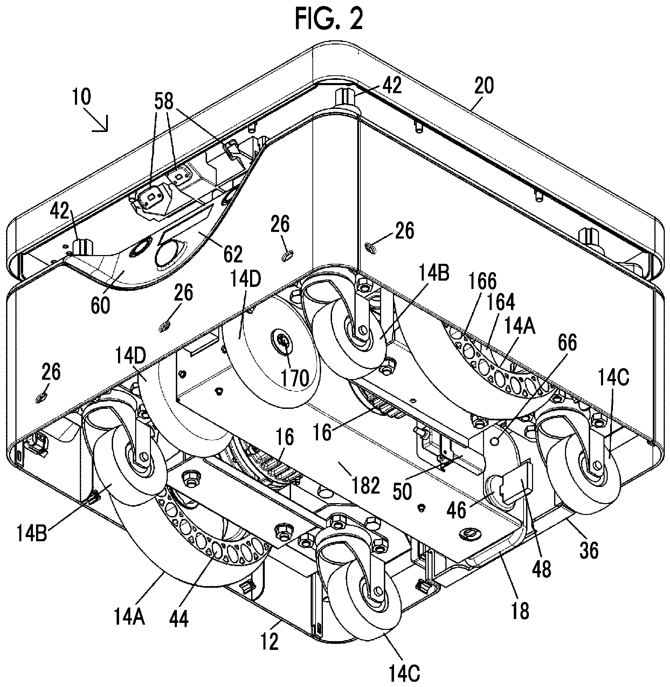

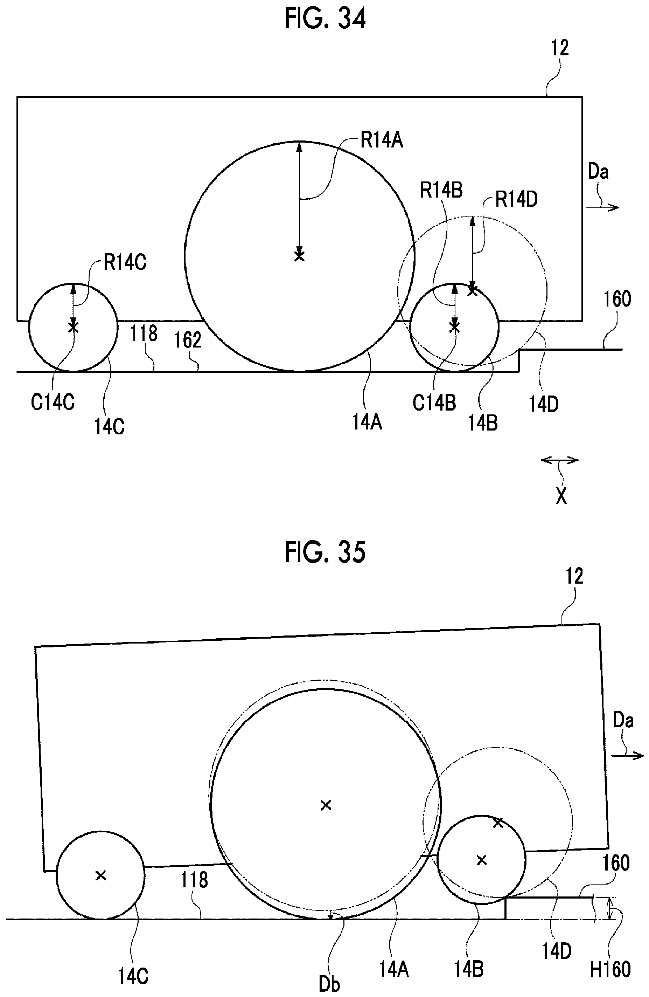

Next, the above-described feature related to the wheel of (2) will be described. Refer to Figs. 2, 28, and 34. The plurality of wheels 14A to 14D are disposed inside the vehicle body housing 106, and are attached to the vehicle body 12 such that a part thereof protrudes downward from the vehicle body housing 106. The plurality of wheels 14A to 14D include main wheels 14A driven to rotate by the wheel drive unit 16, driven wheels 14B and 14C provided on at least one side in the front-rear direction X with respect to the main wheels 14A, and auxiliary wheels 14D for riding on the step portion 160 on the traveling surface 118. The driven wheels 14B and 14C include a front driven wheel 14B provided on the front side in the front-rear direction X (the right side of the paper surface in Fig. 34) with respect to the main wheel 14A, and a rear driven wheel 14C provided on the rear side of the front-rear direction X with respect to the main wheel 14A. The main wheels 14A are provided in pairs at intervals in the left-right direction Y. The same applies to the front driven wheels 14B, the rear driven wheels 14C, and the auxiliary wheels 14D. The AMR 10 has a multi-wheel structure (six-wheel structure) in which a pair of left and right main wheels 14A, a pair of left and right front driven wheels 14B, and a pair of left and right rear driven wheels 14C touch the ground when traveling on the flat surface 162 on the traveling surface 118.

The main wheel 14A of the present embodiment is a wheel with a tire, and includes a wheel 164 and a tire 166 attached to the wheel 164. The type of the main wheel 14A is not particularly limited, and for example, a mecanum wheel, an omni wheel, or the like may be used.

As described above, by the suspension mechanism 116, the main wheel 14A is attached to the vehicle body 12 to be movable up and down within a movable range. The main wheels 14A are disposed above the lower limit position in the movable range with respect to the vehicle body 12 when the wheels 14A to 14C are in contact with the traveling surface 118. Accordingly, when the main wheel 14A is about to rise from the traveling surface 118, the main wheel 14A is allowed to move downward within the movable range relative to the vehicle body 12. The biasing member 126 of the suspension mechanism 116 is in a state of being elastically deformed when each of the wheels 14A to 14C is in contact with the traveling surface 118 in this way, and biases the fixed frame 120 downward. Accordingly, when each of the wheels 14A to 14C is in contact with the traveling surface 118, the suspension mechanism 116 can press the main wheel 14A against the traveling surface 118 by the biasing force of the biasing member 126.

Power is not transmitted from the wheel drive unit 16 to the driven wheels 14B and 14C, and the driven wheels 14B and 14C can rotate by coming into contact with the traveling surface 118 when the AMR 10 travels due to the rotation of the main wheels 14A. The driven wheels 14B and 14C of the present embodiment are wheels with tires, but specific examples thereof are not particularly limited.

The driven wheels 14B and 14C of the present embodiment are disposed below the wheel mounting portions 108b of the partition member 108 which is a part of the vehicle body 12, and are mounted on the wheel mounting portions 108b. Each of the driven wheels 14B and 14C is attached to the vehicle body 12 by using an individual driven wheel attachment mechanism 168. The driven wheel attachment mechanism 168 of the present embodiment connects the driven wheels 14B and 14C which are rotatable around a rotation center line Ca extending in the vertical direction Z (vertical direction) to the vehicle body 12. Accordingly, the AMR 10 can easily turn on the spot. The driven wheel attachment mechanism 168 includes a driven wheel support body 168a using a fork or the like that rotatably supports the driven wheels 14B and 14C around the axial centers C14B and C14C, and a rotary coupling 168b that rotatably connects the driven wheel support body 168a around the rotation center line Ca to the vehicle body 12. The axial centers C14B and C14C of the driven wheels 14B and 14C are disposed at positions deviated from the rotation center line Ca, and a trail is provided between an intersection point of the rotation center line Ca with the traveling surface 118 and a ground contact point of the driven wheels 14B and 14C. Accordingly, when the AMR 10 travels, the traveling direction and the directions of the driven wheels 14B and 14C are easily aligned with each other, and good straight-ahead stability can be obtained.

The auxiliary wheel 14D is provided to correspond to one of the front driven wheel 14B and the rear driven wheel 14C (here, the front driven wheel 14B). The auxiliary wheels 14D are located on the opposite side of the main wheels 14A in the front-rear direction X than the driven wheels 14B corresponding to the auxiliary wheels 14D, and are used to ride on the step portion 160 on the traveling surface 118. Here, the "the opposite side of the main wheels 14A in the front-rear direction X" means the side opposite to the main wheels 14A in the front-rear direction X, and in the case of the front driven wheels 14B, it means the front side of the front driven wheels 14B.

The auxiliary wheel 14D is attached to the vehicle body 12 by using the auxiliary wheel support 170. The auxiliary wheel 14D of the present embodiment is attached to the battery holder 182 which is a part of the vehicle body 12 by using the auxiliary wheel support 170. In addition, the auxiliary wheel 14D may be attached to other parts of the vehicle body 12 (vehicle body housing 106, partition member 108, or the like). The auxiliary wheel support 170 of the present embodiment attaches the auxiliary wheel 14D to the vehicle body 12 to be rotatable only around the axial center of the auxiliary wheel 14D with respect to the vehicle body 12.

The auxiliary wheel 14D is positioned above and apart from the flat surface 162 and is not in contact with the flat surface 162, when the main wheel 14A and the driven wheels 14B and 14C are in contact with the flat surface 162 on the traveling surface 118. The auxiliary wheel 14D is disposed inside the driven wheel 14B and the main wheel 14A corresponding to the auxiliary wheel 14D in the left-right direction Y. The auxiliary wheel 14D is disposed between the pair of left and right driven wheels 14B. The auxiliary wheel 14D of the present embodiment is disposed at a position overlapping each of the driven wheel 14B and the main wheel 14A corresponding to the auxiliary wheel 14D when viewed from the left-right direction Y (viewed from the viewpoint of Fig. 34). A part of the auxiliary wheel 14D protrudes to a side opposite to the main wheel 14A in the front-rear direction (here, the front side) with respect to the axial center C14B of the driven wheel 14B corresponding to the auxiliary wheel 14D.

Refer to Fig. 34. Consider a case where the AMR 10 travels with the opposite side of the main wheels in the front-rear direction X with respect to the auxiliary wheels 14D as the traveling direction Da, and there is the step portion 160 on the traveling surface 118 in the traveling direction Da of the AMR 10. In this case, since a part of the auxiliary wheels 14D protrude more than the driven wheels 14B corresponding to the auxiliary wheels 14D, when the auxiliary wheels 14D come into contact with the step portion 160 on the traveling surface 118 before the driven wheels 14B, the auxiliary wheels 14D can ride on the step portion 160.

Refer to Fig. 35. A part (here, the front part) of the vehicle body 12 is lifted by the auxiliary wheels 14D riding on the step portion 160 of the traveling surface 118, and the driven wheels 14B corresponding to the auxiliary wheels 14D are moved upward away from the traveling surface 118 together with a part of the vehicle body 12. In this state, when the AMR 10 further advances in the traveling direction Da due to the rotation of the main wheels 14A, the driven wheels 14B corresponding to the auxiliary wheels 14D subsequently come into contact with the step portion 160, whereby the driven wheels 14B also ride on the step portion 160.

A case is considered in which the main wheels 14A tend to rise from the traveling surface 118 by a portion of the vehicle body 12 being lifted, in a process in which the auxiliary wheels 14D and the driven wheels 14B ride on the step portion 160 in this way. In this case, the suspension mechanism 116 makes it possible to move the main wheels 14A downward (direction Db) with respect to the vehicle body 12, and then maintain a state in which the main wheels 14A are pressed against the traveling surface 118. Accordingly, it is possible to reduce a situation in which the main wheels 14A rise from the traveling surface 118 in a process in which the auxiliary wheels 14D or the like ride on the step portion 160, and it is possible to secure the traction of the main wheels 14A with respect to the traveling surface 118. In addition, the height H160 of the step portion 160 here means the height from the flat surface 162 without the step portion 160 to the highest position of the step portion 160 on the traveling surface 118.

The effects relating to the above feature (2) will be described. The auxiliary wheel 14D is positioned above and apart from the flat surface 162, when the main wheel 14A and the driven wheels 14B and 14C are in contact with the flat surface 162 on the traveling surface 118. Therefore, in this state, the maximum height of the step portion 160, on which the auxiliary wheel 14D can ride, can be increased, as compared with the case where the auxiliary wheel 14D is in contact with the traveling surface 118. As a result, by using the driven wheel 14B corresponding to the auxiliary wheel 14D, it is possible to increase the maximum height of the step portion 160 that can be overcome by the AMR 10, as compared with the case where only the driven wheel 14B is used. In this way, by increasing the maximum height of the step portion 160 that can be transferred by the AMR 10, the routes and areas that can be traveled by the AMR 10 can be increased, and the usability of the AMR 10 can be improved.

In addition, in order to increase the maximum height of the step portion 160 that can be overcome by the AMR 10, the auxiliary wheel 14D is used, so that it is possible to avoid an increase in the outer diameters of the driven wheels 14B and 14C. Accordingly, it is possible to avoid an increase in the size of the entire AMR 10 in the front-rear direction. As a result, it is possible to avoid an increase in the size of the entire AMR 10 in the front-rear direction while increasing the maximum height of the step portion 160 that can be overcome by the AMR 10.

The auxiliary wheels 14D are disposed at a position overlapping the driven wheels 14B corresponding to the auxiliary wheels 14D. Accordingly, the size of the entire AMR 10 in the front-rear direction can be reduced, as compared with the case where the auxiliary wheels 14D are disposed on the opposite side of the main wheels 14A in the front-rear direction X with respect to the driven wheels 14B corresponding to the auxiliary wheels 14D.

Next, other features relating to the wheels 14A to 14D will be described. Refer to Fig. 34. The outer diameters R14B and R14C of the front driven wheel 14B and the rear driven wheel 14C are smaller than the outer diameter R14A of the main wheel 14A. Accordingly, as compared with a case where the outer diameters R14B and R14C of the front driven wheel 14B and the rear driven wheel 14C are made larger than the outer diameter R14A of the main wheel 14A, the size of the entire AMR 10 in the front-rear direction can be reduced.

The outer diameter R14D of the auxiliary wheel 14D is smaller than the outer diameter R14A of the main wheel 14A. The outer diameter R14D of the auxiliary wheel 14D is larger than the outer diameter R14B of the driven wheel 14B corresponding to the auxiliary wheel 14D. The outer diameter R14D of the auxiliary wheel 14D is larger than the outer diameters R14B and R14C of all the driven wheels 14B and 14C. Therefore, as compared with a case where the outer diameter R14D of the auxiliary wheel 14D is smaller than the outer diameters R14B and R14C of the driven wheels 14B and 14C, the maximum height of the step portion 160 that can be ridden by the auxiliary wheel 14D can be increased. As a result, the maximum height of the step portion 160 that can be overcome by the AMR 10 can be increased.

Among the plurality of wheels 14A to 14D, the outer diameter R14A of the main wheel 14A is the largest, and the outer diameters R14B and R14C of the front driven wheel 14B and the rear driven wheel 14C before and after the main wheel 14A are the smallest. By making the outer diameter R14A of the main wheel 14A the largest, the traction of the main wheel 14A with respect to the traveling surface 118 can be effectively increased. Further, by making the outer diameters R14B and 14C of the driven wheels 14B and 14C the smallest, the size of the entire AMR 10 in the front-rear direction can be reduced as compared with the case where the outer diameters of the driven wheels 14B and 14C are made smaller than the outer diameters of the other wheels.

Refer to Fig. 3. The outer shape of the AMR 10 of the present embodiment has a rectangular shape as a whole in a plan view. In order to form a rectangular shape in this way, in the case of a multi-wheel structure (six-wheel structure) including the main wheel 14A, the front driven wheel 14B, and the rear driven wheel 14C, the size in the front-rear direction tends to be larger than the size Ly in the left-right direction. In this regard, according to the present embodiment, as described above, measures are taken to reduce the size of the entire AMR 10 in the front-rear direction. Therefore, by making the size Lx in the front-rear direction of the AMR 10 close to the size Ly in the left-right direction, the outer shape of the AMR 10 can be made into a square shape as a whole in a plan view. The square shape in the present specification includes a rectangular shape in which the ratio of the size Lx in the front-rear direction to the size Ly in the left-right direction is 1:1.1 or more and 1:0.9 or less, in addition to the geometrically exact square shape. That is, the square shape in the present specification includes a rectangular shape in which 1/1.1 ≤ Lx/Ly ≤ 1/0.9. Accordingly, it is possible to reduce the turning radius when spin turn is performed by avoiding an increase in the size in the front-rear direction, and it is possible to achieve a structure suitable for spin turn having a small turning radius while using the above-described multi-wheel structure. It should be noted that the spin turn here can be implemented by rotating the pair of main wheels 14A in opposite directions with each other by the pair of wheel drive units 16. In addition, the size Ly in the left-right direction and the size Lx in the front-rear direction are, for example, 500 mm or less.

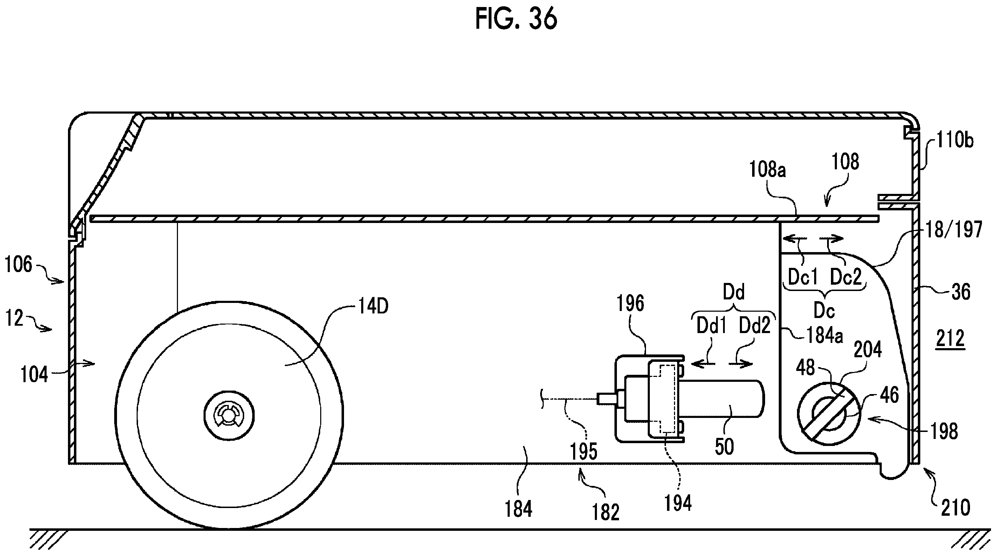

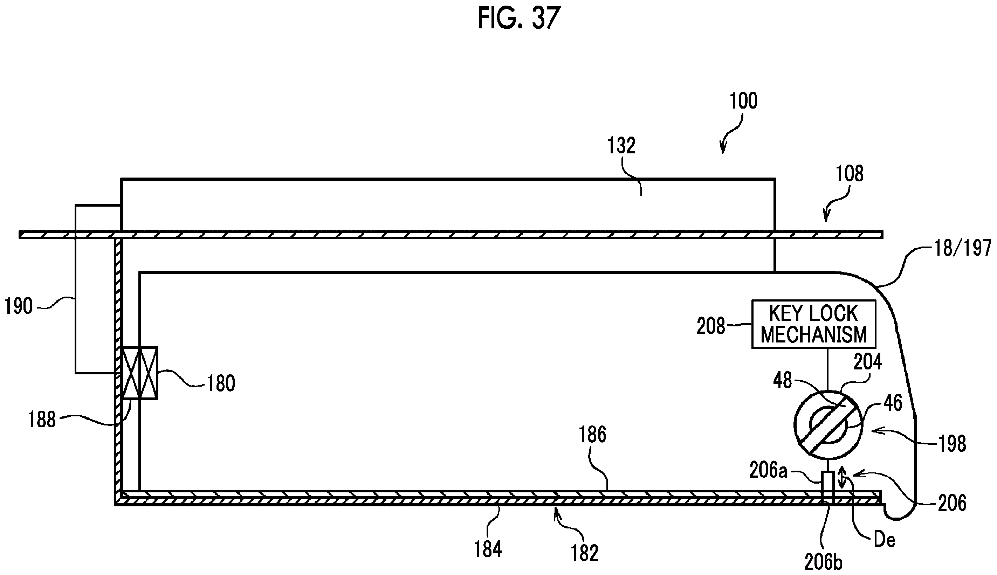

Refer to Figs. 36 and 37. Next, the above-described feature relating to the power supply 197 of the AMR 10 of (3) will be described. The battery 18 serves as a power supply 197 for each electrical equipment used in the AMR 10. The battery 18 is disposed in the vehicle body internal space 104. The battery 18 is provided with a battery terminal 180.

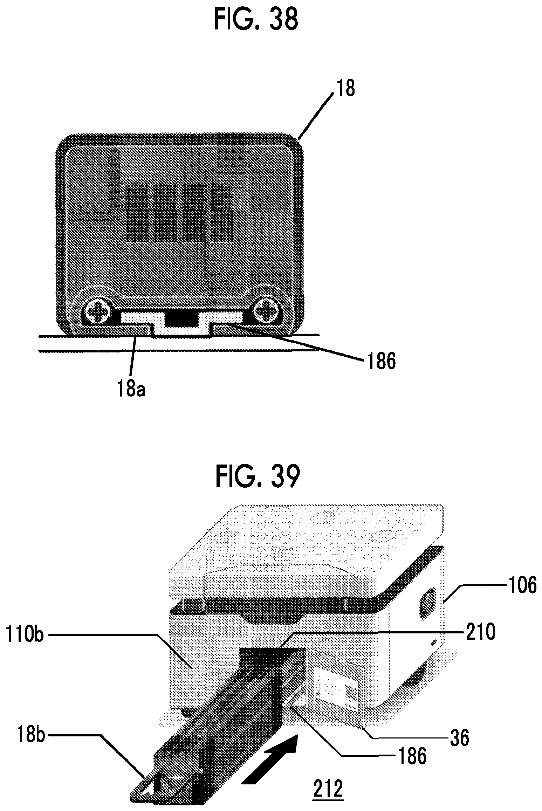

The vehicle body 12 includes a battery holder 182 to and from which the battery 18 can be attached and detached. The battery holder 182 of the present embodiment includes a holder casing 184 that accommodates the battery 18, a guide rail 186 provided in the holder casing 184, and a holder terminal 188 for conducting to the battery terminal 180. The holder casing 184 includes a holder entrance/exit 184a which the battery 18 can be put in and taken out. The guide rail 186 can guide the battery 18 by a slider 18a provided on the battery 18 sliding (see also Fig. 38). One of the battery terminal 180 and the holder terminal 188 (here, the holder terminal 188) is a pin terminal, and the other (here, the battery terminal 180) is a socket terminal into which the pin terminal is inserted. The holder terminal 188 is connected to the circuit board 132 of the control unit 100 as electrical equipment via the power cable 190. Similarly to the cable 102, the power cable 190 is also disposed across the partition member 108 vertically.

The battery 18 is attachable and detachable by moving the battery 18 with respect to the battery holder 182 in the first attachment/detachment direction Dc. Specifically, the battery 18 is attached to the battery holder 182 by moving the battery 18 in the first attachment direction Dc1 which is one side of the first attachment/detachment direction Dc. In this process, the battery 18 is moved along the guide rail 186 of the battery holder 182, and the battery 18 is inserted into the holder casing 184. When the battery 18 is attached to the battery holder 182, the holder terminal 188 of the battery holder 182 and the battery terminal 180 of the battery 18 are conducted, and the battery 18 is connected to the circuit board 132 of the control unit 100. In this case, the battery 18 can supply power to electrical equipment such as the circuit board 132 under a condition that the battery 18 is turned on by a power supply operation unit 198 to be described later.

The battery 18 is removed from the battery holder 182 by moving the battery 18 in the first removal direction Dc2 which is the other side of the first attachment/detachment direction Dc. In this case, the conduction of the battery terminal 180 to the holder terminal 188 is released. After the battery 18 is removed from the battery holder 182, the battery 18 is moved in the first removal direction Dc2 along the guide rail 186 of the battery holder 182, whereby the battery 18 is pulled out from the holder casing 184. When the battery 18 is attached to or detached from the battery holder 182, work may be performed in a state of holding a handle 18b provided at the end of the battery 18 in the first removal direction Dc2 (refer to Fig. 39).

The battery 18 can be charged using a household power supply by using a charger in a state of being removed from the vehicle body 12. When the cable of the charger is connected to the charging port 66 (refer to Fig. 2) on the side surface of the battery 18, charging starts automatically. When charging is completed, the LED (not shown) of the charger changes from orange to green.

The above battery 18 is disposed between the pair of wheel drive units 16 on the lower side of the partition member 108 (see Fig. 27). Accordingly, as compared with the case where the battery 18 which is a heavy object is disposed on the upper side of the partition member 108, the centroid position of the AMR 10 can be lowered, and the traveling stability of the AMR 10 can be effectively enhanced. In addition, the battery 18 is disposed inside the pair of main wheels 14A in the left-right direction. Therefore, as compared with the case where the battery 18 is disposed outside the pair of main wheels 14A in the left-right direction, the centroid position of the AMR 10 can be brought closer to the pair of main wheels 14A, and the traveling stability of the AMR 10 can also be effectively enhanced in that respect.

The AMR 10 includes a medium attachment/detachment unit 194 for attaching/detaching the storage medium 50. The storage medium 50 is a USB memory as a flash memory in the present embodiment. Specific examples of the storage medium 50 are not particularly limited, and for example, an external HDD or the like may be used in addition to an SD card or the like as the flash memory. The medium attachment/detachment unit 194 is, for example, a USB connector to and from which a USB memory can be attached and detached. The medium attachment/detachment unit 194 is provided on a side surface portion on one side in the left-right direction of the holder casing 184 in the battery holder 182 that is a part of the vehicle body 12. In order to achieve this, the medium attachment/detachment unit 194 is fixed to a part of the vehicle body 12 (here, the holder casing 184) by using the fixing member 196. The medium attachment/detachment unit 194 is connected to the circuit board 132 of the control unit 100 via a cable 195. The position where the medium attachment/detachment unit 194 is provided is not particularly limited, and may be a partition member 108, a vehicle body housing 106, or the like that is a part of the vehicle body 12.

The storage medium 50 can be attached to and detached from the medium attachment/detachment unit 194 by moving the storage medium 50 in the second attachment/detachment direction Dd. Specifically, the storage medium 50 can be attached to the medium attachment/detachment unit 194 by moving the storage medium 50 in the second attachment direction Dd1 which is one side of the second attachment/detachment direction Dd. In addition, the storage medium 50 can be removed from the medium attachment/detachment unit 194 by moving the storage medium 50 in the second removal direction Dd2 which is the other side of the second attachment/detachment direction Dd.

The storage medium 50 stores control software that controls the operation of the AMR 10. When the storage medium 50 is attached to the medium attachment/detachment unit 194, the control unit 136 of the control unit 100 expands the control software stored in the storage medium 50 into the RAM in the control unit 136, and executes the expanded control software to control the operation of the AMR 10. By storing the control software in the storage medium 50, the control software can be easily updated.

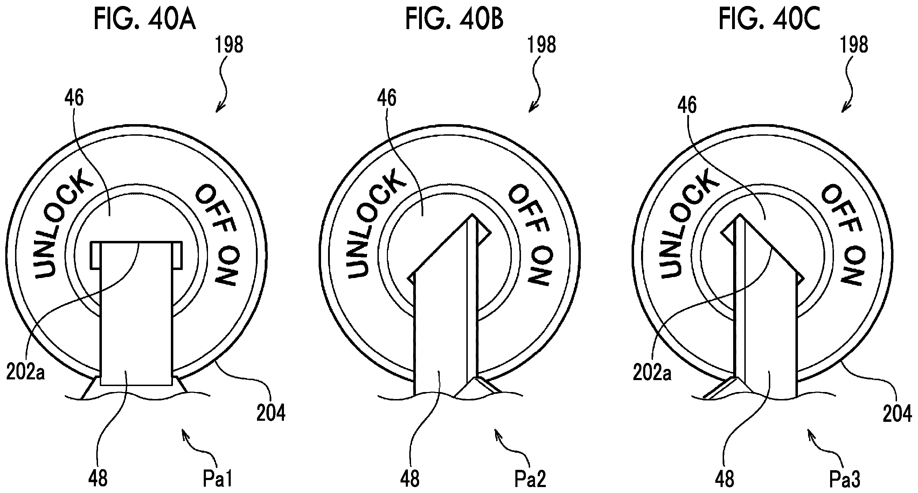

Refer to Figs. 37 and 40. The AMR 10 includes the power supply operation unit 198 for turning the power supply 197 (here, the battery 18) on or off. The power supply operation unit 198 of the present embodiment includes a power key 48, a key switch 46 to and from which the power key 48 is attached and detached and is movable between a plurality of switching positions Pa1 to Pa3, and a switch housing 204 that movably supports the key switch 46. The key switch 46 is provided on a side surface portion of the battery 18. The key switch 46 includes a key hole 202a into which a power key 48 (physical key) is inserted. The power key 48 is attached to the key switch 46 by being inserted into the key hole 202a, and is pulled out from the key switch 46 by being removed from the key hole 202a.

The plurality of switching positions Pa1 to Pa3 of the present embodiment include an unlock position Pa3 for releasing the lock by the battery lock mechanism 206 described later, in addition to the on position Pa1 for turning on the power supply 197 and the off position Pa2 for turning off the power supply 197. The key switch 46 of the present embodiment can move between a plurality of switching positions Pa1 to Pa3 by rotating the key switch 46 together with the power key 48 in a state where the power key 48 is attached. The key switch 46 of the present embodiment can be moved in the order of the on position Pa1 → the off position Pa2 → the unlock position Pa3 by rotating the key switch 46 counterclockwise (one side in the circumferential direction). When the key switch 46 is in the on position Pa1, the power supply 197 is turned on, and when the key switch 46 is in the off position Pa2 and the unlock position Pa3, the power supply 197 is turned off.

By pushing the key switch 46 together with the power key 48 in the insertion direction of the power key 48 with respect to the key hole 202a, the key switch 46 can move from the initial position to the push-in position against the biasing force of a biasing member (spring or the like) (not shown). The key switch 46 can return to the initial position by the biasing member by releasing the pushing force against the key switch 46. The power supply operation unit 198 restrains the movement of the key switch 46 between the off position Pa2 and the unlock position Pa3, when the key switch 46 is in the initial position. The power supply operation unit 198 allows the movement of the key switch 46 between the off position Pa2 and the unlock position Pa3, when the key switch 46 is in the push-in position. In addition, the power supply operation unit 198 allows the key switch 46 to move between the off position Pa2 and the on position Pa1, even when the key switch 46 is at either the initial position or the push-in position.

The AMR 10 includes a battery lock mechanism 206 that switches between locking and unlocking of the battery 18 with respect to the battery holder 182. The battery lock mechanism 206 is configured by using, for example, a lock pin 206a provided on the battery 18 to be able to advance or retreat in the advancing/retreating direction De, and a pin hole 206b provided in the battery holder 182. When the lock pin 206a moves forward and is inserted into the pin hole 206b, the lock pin 206a is hooked on the pin hole 206b and is locked in a state where the battery 18 is attached to the battery holder 182. In this case, the battery lock mechanism 206 restricts the movement of the battery 18 with respect to the battery holder 182 in the first removal direction Dc2. When the lock pin 206a is retracted and pulled out from the pin hole 206b, the lock of the battery 18 with respect to the battery holder 182 is released. In this case, the battery 18 is allowed to move with respect to the battery holder 182 in the first removal direction Dc2. Specific examples of the battery lock mechanism 206 are not particularly limited, and various generally used lock mechanisms may be adopted.

The battery lock mechanism 206 of the present embodiment can switch between locking and unlocking of the battery 18 in conjunction with the power supply operation unit 198 (key switch 46). Specifically, the battery lock mechanism 206 is in a locked state in which the battery 18 is locked to the battery holder 182, when the key switch 46 is in the on position Pa1 and the off position Pa2. On the other hand, the battery lock mechanism 206 is in an unlocked state in which the lock of the battery 18 to the battery holder 182 is released, when the key switch 46 is at the unlock position Pa3.

In addition to this, the power supply operation unit 198 includes a key lock mechanism 208 that switches between locking and unlocking of the power key 48 to the key switch 46 in conjunction with the on/off of the power supply 197. The key lock mechanism 208 locks the power key 48 with respect to the key switch 46, when the key switch 46 is in the on position Pa1, that is, when the power supply 197 is in the on state. In this case, the power key 48 cannot be removed from the key switch 46 by the key lock mechanism 208. On the other hand, the key lock mechanism 208 releases the lock of the power key 48 with respect to the key switch 46, when the key switch 46 is at the off position Pa2 and the unlock position Pa3, that is, when the power supply 197 is in an off state. In this case, the power key 48 is removable from the key switch 46. For example, the key lock mechanism 208 is configured by using a pin movable to the lock position that locks the power key 48 in the attachment/detachment direction (the plugging and unplugging direction) and the unlock position, a transmission member that transmits the movement of the key switch 46 to the pin and moves the pin between the lock position and the unlock position, and the like. In addition to this, as the key lock mechanism 208, various key lock mechanisms used for the key switch may be adopted.

Refer to Figs. 36 and 39. The vehicle body 12 includes a vehicle body entrance/exit 210 for putting and taking the battery 18 in and out of the vehicle body internal space 104, and a door body 36 capable of opening and closing the vehicle body entrance/exit 210. Although the vehicle body entrance/exit 210 is provided in the rear wall portion 110b of the vehicle body housing 106 in the present embodiment, the vehicle body entrance/exit 210 may be provided in the side wall portion 110c, the front wall portion 110a, or the like.

The door body 36 of the present embodiment is movably connected to the vehicle body housing 106 by using a connection mechanism such as a hinge mechanism. The door body 36 can be attached to and detached from the vehicle body housing 106, and can open and close the vehicle body entrance/exit 210 by the attachment and detachment. In order to achieve this, the door body 36 of the present embodiment can be attached to and detached from the vehicle body housing 106 with one touch by using a pair of magnets having different polarities. In addition to this, the door body 36 may be attached to and detached from the vehicle body housing 106 by using a screw or the like with respect to the vehicle body housing 106 without using the connection mechanism.

The door body 36 functions as a battery replacement door that is opened and closed when the battery 18 is replaced. The battery 18 can be attached to and detached from the battery holder 182 that is a part of the vehicle body 12, when the vehicle body entrance/exit 210 is opened by the door body 36. The battery 18 can be put in and taken out of the vehicle body internal space 104 through the vehicle body entrance/exit 210 in a state where the wheels 14A to 14D of the AMR 10 are in contact with the traveling surface 118. A QR code (registered trademark) for the official website is written inside the door body 36. It is possible to download the user manual from the official website.

The storage medium 50 attached to the medium attachment/detachment unit 194 is provided at a position accessible from the external space 212 around the AMR 10 through the vehicle body entrance/exit 210 when the door body 36 is in the open state. The term "accessible" as used herein means that any of a worker's hand or a tool in the external space 212 reaches the mentioned object (here, the storage medium 50). In the present embodiment, in addition to this, the power supply operation unit 198 (power key 48) is also provided at a position accessible from the external space through the vehicle body entrance/exit 210 when the door body 36 is in the open state.

In addition to the battery 18, the vehicle body entrance/exit 210 also serves a purpose of putting and taking the storage medium 50 in and out of the vehicle body internal space 104. Therefore, separately from the vehicle body entrance/exit 210 for the battery 18, a dedicated vehicle body entrance/exit for putting in and taking out the storage medium 50 can be omitted, so that the number of vehicle body entrances/exits provided in the vehicle body 12 can be reduced. The vehicle body entrance/exit 210 also serves a purpose of inserting a worker's hand in order to turn the power supply on or off by using the power supply operation unit 198 in addition to putting in and taking out the battery 18. Therefore, a vehicle body entrance/exit 210 dedicated to operating the power supply operation unit 198 can be omitted separately from the vehicle body entrance/exit 210 for the battery 18, and the number of vehicle body entrances/exits 210 provided in the vehicle body 12 can be reduced.

Refer to Fig. 36. The AMR 10 is configured such that the storage medium 50 can be removed from the medium attachment/detachment unit 194 on at least one condition that the power supply 197 is turned off by the power supply operation unit 198. In a case where the power supply 197 is in the on state, the storage medium 50 cannot be removed from the medium attachment/detachment unit 194 in the second removal direction Dd2. In the present embodiment, in order to make the storage medium 50 non-removable from the medium attachment/detachment unit 194 in this manner, the power key 48 is disposed in the second removal direction Dd2 with respect to the storage medium 50 attached to the medium attachment/detachment unit 194. Here, the power key 48 is disposed rearward (on the right side of the paper in Fig. 36) with respect to the storage medium 50. Accordingly, the power key 48 interferes when the storage medium 50 is moved from the medium attachment/detachment unit 194 in the second removal direction Dd2, so that the storage medium 50 cannot be removed from the medium attachment/detachment unit 194. In particular, in the present embodiment, when an attempt is made to access through the vehicle body entrance/exit 210, the storage medium 50 cannot be removed due to the interference by the power key 48.

In the present embodiment, when any of the following second and third conditions is satisfied, in addition to the first condition that the power supply 197 is turned off, the storage medium 50 can be removed from the medium attachment/detachment unit 194, and the storage medium 50 can be replaced. The second condition is to remove the power key 48 from the key switch 46 described below. The third condition is to remove the battery 18 from the battery holder 182 described below. When any of the second condition and the third condition is satisfied, the power key 48 is not disposed in the second removal direction Dd2 with respect to the storage medium 50, and the storage medium 50 can be removed from the medium attachment/detachment unit 194.

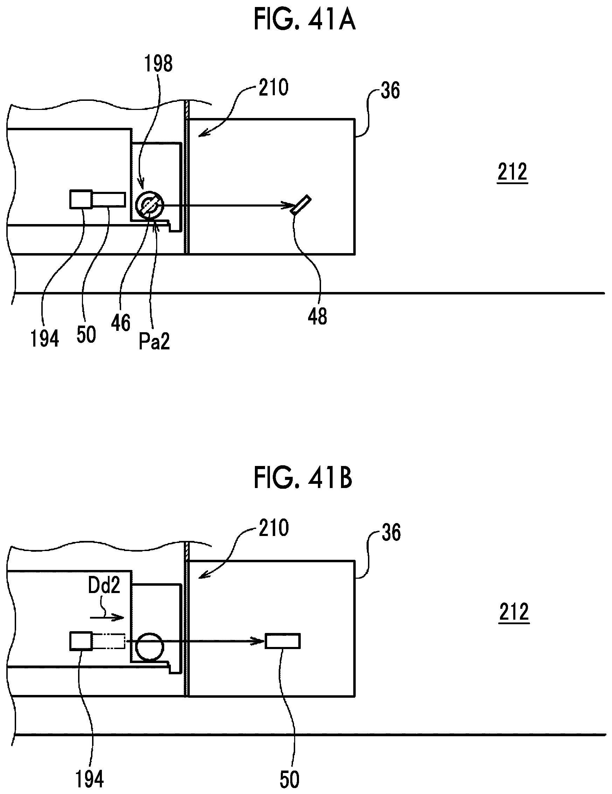

Refer to Figs. 41A and 41B. The second condition will be described. When the key switch 46 is moved to the off position Pa2 or the unlock position Pa3 together with the power key 48 and the power supply 197 is switched to the off state, the lock of the power key 48 to the key switch 46 by the key lock mechanism 208 is released in conjunction with the movement. Along with this, the power key 48 can be removed from the key switch 46 (refer to Fig. 41A). In this case, by removing the power key 48 from the key switch 46, the second condition described above is satisfied, and the storage medium 50 can be removed from the medium attachment/detachment unit 194 (refer to Fig. 41B).

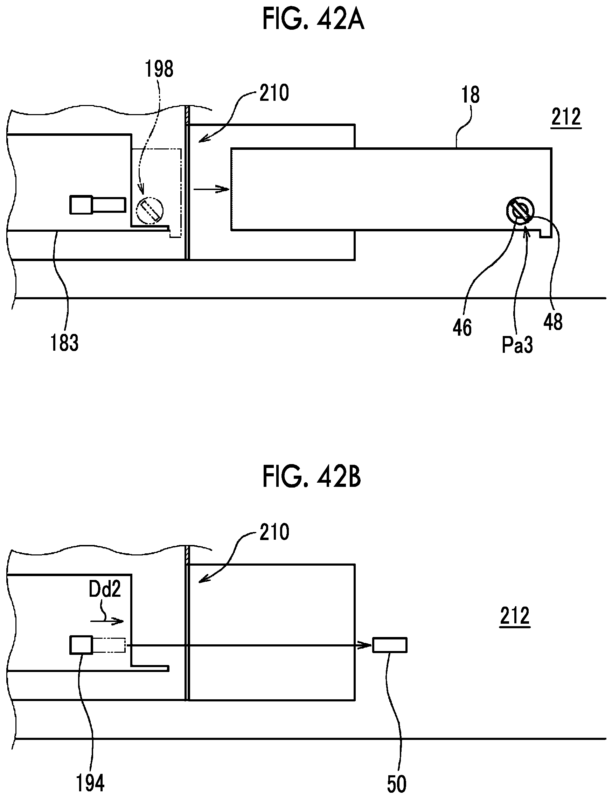

Refer to Figs. 42A and 42B. The third condition will be described. By moving the key switch 46 to the unlock position Pa3, the lock by the battery lock mechanism 206 is released, and the battery 18 can be removed from the battery holder 182 (refer to Fig. 42A). In this case, by removing the battery 18 from the battery holder 182, the above-described third condition is satisfied, and the storage medium 50 can be removed from the medium attachment/detachment unit 194 (refer to Fig. 42B).

In this way, the storage medium 50 can be removed from the medium attachment/detachment unit 194 on at least one condition that the power supply 197 is turned off. Therefore, it is possible to avoid a situation in which the storage medium 50 is unintentionally removed from the medium attachment/detachment unit 194 when the power supply 197 is in the on state. In such a case where the power supply 197 is in the on state, the program stored in the storage medium 50 may be executed by the control unit 100 or data may be written to the storage medium 50. Therefore, by preventing the storage medium 50 from being unintentionally removed, it is possible to avoid a situation in which the storage medium 50 is removed during the execution of such a program or the writing of data. As a result, it is possible to prevent the occurrence of a defect (for example, data loss of the storage medium) associated therewith.

The procedure for replacing the storage medium 50 will be described. Before the existing storage medium 50 is removed, the vehicle body entrance/exit 210 of the vehicle body 12 is closed by the door body 36. Further, the power key 48 is attached to the key switch 46 of the power supply operation unit 198, and the key switch 46 is disposed at the on position Pa1, so that the power supply is turned on by the power supply operation unit 198.

In order to remove the existing storage medium 50, first, the vehicle body entrance/exit 210 is opened by moving the door body 36 (refer to Figs. 41A and 42A). Subsequently, the power supply operation unit 198 is accessed from the external space 212 through the vehicle body entrance/exit 210, and the power supply operation unit 198 is operated to switch the power supply 197 to an off state (that is, the first condition described above is satisfied). Subsequently, the work is performed to satisfy either the second condition or the third condition described above. In order to satisfy the second condition, the power supply operation unit 198 is accessed and the power key 48 is removed from the key switch 46 (refer to Fig. 41A). In order to satisfy the third condition, the key switch 46 is moved from the off position Pa2 to the unlock position Pa3, thereby releasing the lock by the battery lock mechanism 206. Subsequently, the battery 18 is accessed through the vehicle body entrance/exit 210, and the battery 18 is removed from the battery holder 182 (refer to Fig. 42A). When either the second condition or the third condition is satisfied, the existing storage medium 50 is accessed from the external space 212 through the vehicle body entrance/exit 210, and the storage medium 50 is removed from the medium attachment/detachment unit 194 by being moved in the second removal direction Dd2 (refer to Fig. 41B and Fig. 42B).

In order to attach a new storage medium 50, the new storage medium 50 is disposed in the vehicle body internal space 104 through the vehicle body entrance/exit 210 in an open state. Subsequently, the storage medium 50 is attached to the medium attachment/detachment unit 194 by moving the storage medium 50 to the medium attachment/detachment unit 194 in the second attachment direction Dd1. After that, when the above-described second condition is satisfied when the existing storage medium 50 is removed, the power key 48 is attached to the key switch 46. Accordingly, the situation before the second condition is satisfied is returned. In a case where the above-described third condition is satisfied when the existing storage medium 50 is removed, the battery 18 is disposed in the vehicle body internal space 104 through the vehicle body entrance/exit 210, and the battery 18 is attached to the battery holder 182. Subsequently, the key switch 46 is moved from the unlock position Pa3 to the off position Pa2, and the battery 18 is locked by the battery lock mechanism 206. Accordingly, the situation before the third condition is satisfied is returned. After returning to the situation before the second condition and the third condition are satisfied, the power supply operation unit 198 is operated to switch the power supply 197 to an on state. Accordingly, the replacement work of the storage medium 50 is completed.

A procedure for turning on the power supply 197 will be described. First, the battery 18 is attached to the battery holder 182. In this case, the battery 18 is disposed in the vehicle body internal space 104 through the vehicle body entrance/exit 210 in an open state. After that, the power key 48 is inserted into the key switch 46, and the key switch 46 is moved from the unlock position Pa3 to the off position Pa2 in a state where the key switch 46 together with the power key 48 are pushed from the initial position to the push-in position. After that, when the key switch 46 is moved from the off position Pa2 to the on position Pa1, the power supply 197 is turned on. When the power supply 197 is turned on, the LED lamp of the vehicle body 12 is lit in a predetermined lighting pattern (for example, changing to seven colors). When the preparation of the AMR 10 is completed, the color of the LED lamp no longer changes and turns green, and at the same time, the remaining battery level is displayed on the display. This completes the preparation for connecting to the AMR 10 with Wifi (registered trademark) and receiving the operation.

A procedure for turning off the power supply 197 will be described. When the power supply 197 is turned off, the control unit 100 is completely shut down by pressing the shutdown button 34 in advance. When the shutdown is completed, the LED lamp is turned off. When the LED lamp is turned off, the key switch 46 of the battery 18 is moved from the on position Pa1 to the off position Pa2. With this, the power supply 197 is turned off.

Next, other features different from the above will be described. Refer to Fig. 28. The tire 166 is formed of an elastic body such as rubber. The tire 166 includes a plurality of hole portions 166a which are open to side surface portions on both sides in the left-right direction. The plurality of hole portions 166a are arranged such that the same hole pattern is repeated at a constant pitch in the circumferential direction. The hole portion 166a opened in the left side surface portion of the tire 166 and the hole portion 166a opened in the right side surface portion are connected to each other in the axial direction of the tire 166. By forming the plurality of hole portions 166a in the tire 166, the tire 166 is likely to be elastically deformed when the main wheel 14A comes into contact with the traveling surface 118. As a result, when the main wheel 14A is about to rise from the traveling surface 118, the elastically deformed portion of the tire 166 is restored, so that it becomes easier to maintain a state in which the tire 166 of the main wheel 14A is in contact with the traveling surface 118, and it becomes easier to secure the traction of the main wheel 14A with respect to the traveling surface 118.

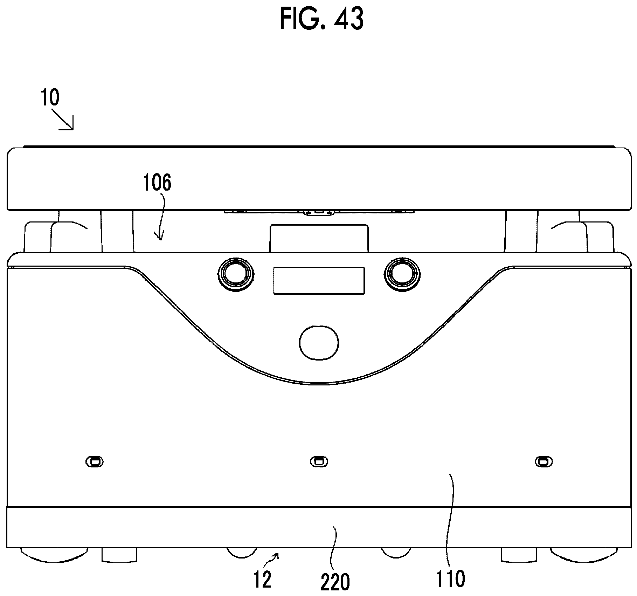

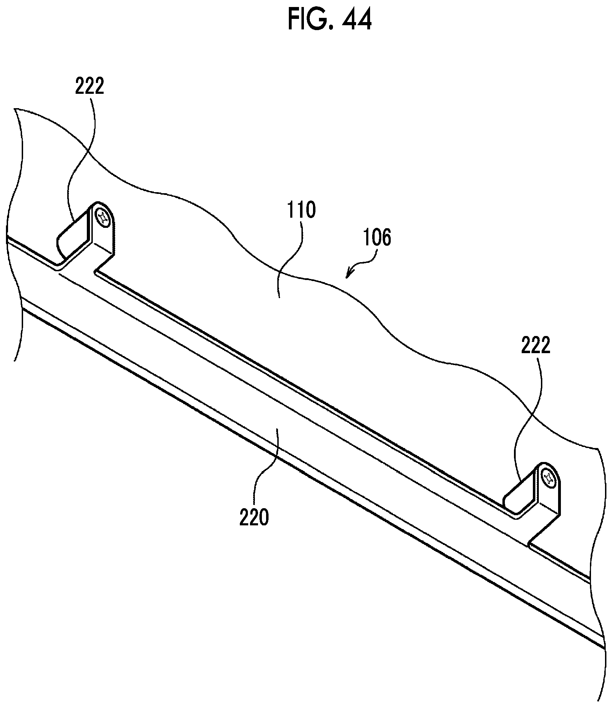

Refer to Figs. 43 and 44. The vehicle body 12 may include a closing member 220 for partially closing the gap between the vehicle body housing 106 and the traveling surface 118. The closing member 220 is provided to extend downward from the outer peripheral wall portion 110 of the vehicle body housing 106. The closing member 220 is attached to a first portion-to-be attached 222 provided on a part of the vehicle body 12 (here, an inner surface portion of the outer peripheral wall portion 110 of the vehicle body housing 106). The means for attaching the closing member 220 to the first portion-to-be attached 222 is not particularly limited, and a snap fit, a magnet, or the like may be used in addition to the case where a screw is used. By providing the first portion-to-be attached 222 in the vehicle body 12, the closing member 220 can be attached to the vehicle body 12 afterwards.

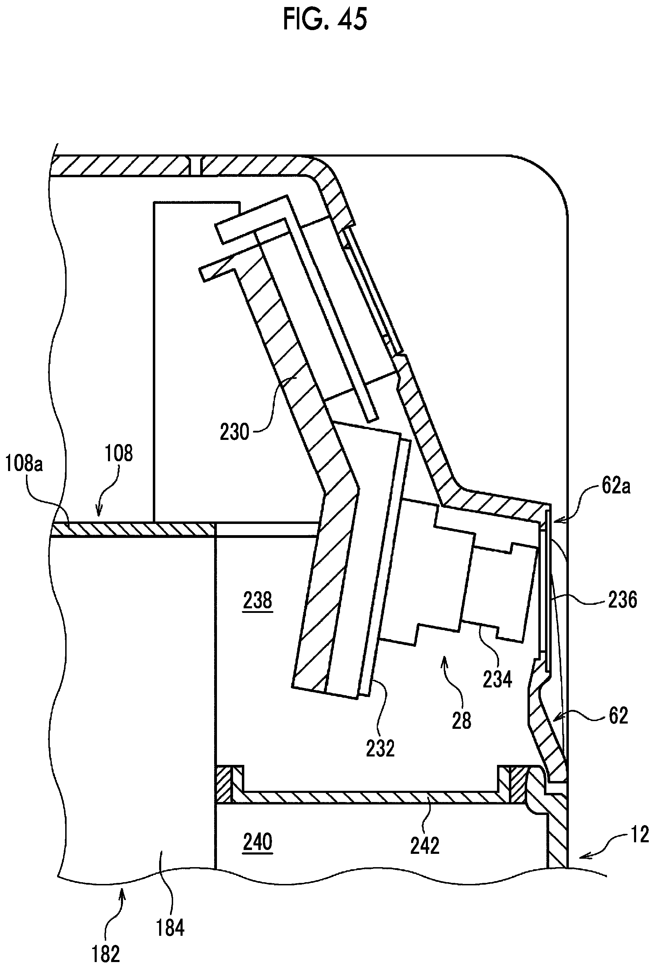

Refer to Fig. 45. The camera 28 is attached to the partition member 108 which is a part of the vehicle body 12 via the camera holder 230. The camera 28 includes a substrate 232 on which an image pickup element (not shown) is mounted, and a lens barrel 234 that is mounted on the substrate 232 and holds a lens (not shown). The camera 28 can capture an image corresponding to the external light by receiving the external light guided through the lens by the image pickup element. The panel portion 62 of the vehicle body housing 106 includes a light guide hole 62a for guiding external light to the camera 28. The light guide hole 62a is covered with a polarizing member 236 such as a polarizing film for polarizing the external light. The polarizing member 236 is disposed in the incident path of light to the image pickup element of the camera 28. The polarizing member 236 makes it possible to avoid a situation in which dust around the AMR 10 enters the location where the camera 28 is disposed through the light guide hole 62a. The absorption axis of the polarizing member 236 is set to be along the horizontal axis. Accordingly, in an environment in which the traveling surface 118 is irradiated with sunlight, the polarizing member 236 absorbs the horizontal direction component of the reflected light of the traveling surface, whereby the recognition accuracy of the line on the traveling surface 118 can be improved.

The AMR 10 may include a dustproof member 242 for vertically partitioning the disposition space 238 of the camera 28 and the lower space 240 below the camera 28. The dustproof member 242 is attached to a second portion-to-be attached (not shown) provided on a part of the vehicle body 12 (partition member 108 in this case). The dustproof member 242 is attached to a second portion-to-be attached of the vehicle body 12 using a screw, and the second portion-to-be attached includes a screw insertion hole through which the screw passes. The means for attaching the dustproof member 242 to the second portion-to-be attached is not particularly limited, and a snap fit, a magnet, or the like may be used in addition to the case where a screw is used. By providing such a second portion-to-be attached on the vehicle body 12, the dustproof member 242 can be attached to the vehicle body 12 afterward.

Modification examples of the above components will be described.

The AMR 10 may not include the auxiliary wheel 14D. When the AMR 10 includes the auxiliary wheel 14D, it is not essential that the vehicle body 12 includes the partition member 108. The auxiliary wheel 14D may be attached to the vehicle body 12 that does not include the partition member 108. In addition, the auxiliary wheel 14D may be provided corresponding to the rear driven wheel 14C, or may be individually provided corresponding to each of the front driven wheel 14B and the rear driven wheel 14C.

The number of the main wheels 14A, the driven wheels 14B and 14C, and the auxiliary wheels 14D of the AMR 10 is not particularly limited. The number of the wheels may be singular or three or more. The driven wheels 14B and 14C may be provided on at least one side in the front-rear direction X with respect to the main wheel 14A, and may include only one of the front driven wheel 14B and the rear driven wheel 14C.

The outer diameter R14D of the auxiliary wheel 14D may be equal to or smaller than the outer diameters R14B and R14C of the driven wheels 14B and 14C corresponding to the auxiliary wheel 14D. The auxiliary wheel 14D may be disposed at a position deviated in the front-rear direction X with respect to the driven wheels 14B and 14C corresponding to the auxiliary wheel 14D when viewed from the left-right direction. The outer diameters R14B and R14C of the driven wheels 14B and 14C may be larger than the outer diameter R14A of the main wheel 14A.

The number of the wheel drive units 16 is not particularly limited. For example, the pair of main wheels 14A may be driven by a single wheel drive unit 16 including a common drive shaft.

The AMR 10 does not include the pillar member 42, and the top plate 20 may be provided integrally with the vehicle body 12.

In the suspension mechanism 116, the main wheels 14A may be attached to the vehicle body 12 to be movable up and down, and the main wheels 14A may be pressed against the traveling surface 118. In order to achieve this, a specific example of the suspension mechanism 116 is not particularly limited. For example, various independent suspension type suspensions (such as a trailing arm type suspension), rigid axle suspension type suspensions (such as a link type suspension), or the like may be used. The suspension mechanism 116 may have the main wheels 14A or the like attached to portions other than the partition member 108 of the vehicle body 12.

The power supply 197 to be switched on or off by the power supply operation unit 198 is not limited to the battery 18. For example, the power supply 197 may be an external power supply outside the AMR 10. In this case, the electric power of the external power supply may be supplied to the electrical equipment of the AMR 10 by wireless power supply. A specific example of the power supply operation unit 198 is not limited to a combination of the power key 48 and the key switch 46. The power supply operation unit 198 may be, for example, a switch that does not use the power key 48. In this case, a medium lock mechanism capable of switching between locking and unlocking of the storage medium 50 with respect to the medium attachment/detachment unit 194 in conjunction with the on/off of the power supply 197 may be provided. This medium lock mechanism locks the storage medium 50 with respect to the medium attachment/detachment unit 194 when the power supply is in the on state, and unlocks the storage medium 50 when the power is off.

The disposition position of the battery 18 is not particularly limited. The battery 18 may be disposed on the upper side of the partition member 108, for example. In addition, one or a plurality of batteries 18 may be disposed outward a pair of wheel drive units 16 in the left-right direction.

The AMR 10 may be configured such that the storage medium 50 can be removed from the medium attachment/detachment unit 194 on at least one condition that the power supply 197 is turned off by the power supply operation unit 198. In order to achieve this, when only one of the above-described second and third conditions is satisfied, in addition to the first condition, the storage medium 50 may be removable, or when only the first condition is satisfied, the storage medium 50 may be removable. The case where only the first condition is satisfied assumes, for example, a case where the lock of the storage medium is released when the power supply is in the off state after the above-described medium lock mechanism is installed. In addition, in order to achieve this, it is not essential that the vehicle body 12 includes the partition member 108.

The vehicle body entrance/exit 210 for putting and taking the battery 18 in and out of the vehicle body internal space and the vehicle body entrance/exit for putting and taking the storage medium 50 in and out may be separate bodies.

### Industrial Applicability

The present disclosure relates to an autonomous bogie.

### Reference Signs List

- 10: autonomous bogie (AMR)
- 12: vehicle body
- 14A: main wheel
- 14B: front driven wheel
- 14C: rear driven wheel
- 14D: auxiliary wheel
- 16: wheel drive unit
- 18: battery
- 20: top plate
- 36: door body
- 42: pillar member
- 46: key switch
- 100: control unit
- 104: vehicle body internal space
- 108: partition member
- 116: suspension mechanism
- 118: traveling surface
- 160: step portion
- 162: flat surface
- 182: battery holder
- 192: storage medium
- 194: medium attachment/detachment unit
- 197: power supply
- 198: power supply operation unit
- 200: power key
- 210: vehicle body entrance/exit

## Claims

1. An autonomous bogie comprising:
a vehicle body (12);
a partition member (108) that is provided on the vehicle body and vertically partitions a vehicle body internal space;
a wheel drive unit (16) that is disposed on a lower surface side of the partition member;
a control unit (100) that is disposed on an upper surface side of the partition member;
**characterised in that** the autonomous bogie also comprises
a cable (102) that is disposed across the partition member and connects the wheel drive unit and the control unit.

2. The autonomous bogie according to claim 1, further comprising:
a plurality of pillar members that rise upward from the partition member and support a top plate.

3. The autonomous bogie according to claim 1, further comprising:
a main wheel driven by the wheel drive unit;
a driven wheel provided on at least one side in a front-rear direction with respect to the main wheel; and
an auxiliary wheel that rides on a step portion on a traveling surface, wherein
when the main wheel and the driven wheel are in contact with a flat surface on the traveling surface, the auxiliary wheel is positioned above the flat surface.

4. The autonomous bogie according to claim 3, wherein
an outer diameter of the auxiliary wheel is larger than an outer diameter of the driven wheel.

5. The autonomous bogie according to claim 3 or 4, wherein
the auxiliary wheel is disposed at a position overlapping the driven wheel when viewed from a left-right direction.

6. The autonomous bogie according to claim 3 or 4, further comprising:
a pair of left and right main wheels, wherein
the driven wheel includes a pair of left and right front driven wheels and a pair of left and right rear driven wheels, and
outer diameters of the front driven wheel and the rear driven wheel are smaller than an outer diameter of the main wheel.

7. The autonomous bogie according to claim 3 or **4,** further comprising:
a suspension mechanism that attaches the main wheel to the vehicle body to be movable up and down, wherein
the suspension mechanism presses the main wheel against the traveling surface.

8. The autonomous bogie according to claim 1, further comprising:
a pair of left and right wheel drive units; and
a battery disposed between the pair of wheel drive units on a lower side of the partition member.

9. The autonomous bogie according to claim 1, further comprising:
a medium attachment/detachment unit for attaching/detaching a storage medium; and
a power supply operation unit that turns a power supply on or off, wherein
the storage medium is removable from the medium attachment/detachment unit on at least one condition that the power supply is in an off state by the power supply operation unit.

10. The autonomous bogie according to claim 9, wherein
the power supply operation unit includes a power key, and a key switch to and from which the power key is attached and detached, and
the storage medium is removable from the medium attachment/detachment unit, by removing the power key from the key switch, when the power supply is in the off state.

11. The autonomous bogie according to claim 9, further comprising:
a battery serving as the power supply; and
a battery holder to and from which the battery is attachable and detachable, wherein
the storage medium is removable from the medium attachment/detachment unit, by removing the battery from the battery holder, when the power supply is in the off state.

12. The autonomous bogie according to claim 9, wherein
the vehicle body includes a vehicle body entrance/exit for putting and taking a battery in and out of the vehicle body internal space, and a door body capable of opening and closing the vehicle body entrance/exit, and
the storage medium attached to the medium attachment/detachment unit is provided at a position accessible from an external space through the vehicle body entrance/exit when the door body is in an open state.

13. An assembly method for an autonomous bogie, comprising:
a step of attaching a wheel drive unit to a lower surface side of a partition member that vertically partitions a vehicle body internal space of a vehicle body;
a step of attaching a control unit to an upper surface side of the partition member;
**characterised in that** the assembly method also comprises
a step of connecting the wheel drive unit and the control unit with a cable disposed across the partition member.

## Patentansprüche

1. Autonomes Drehgestell umfassend:
eine Fahrzeugkarosserie (12);
ein Trennelement (108), das an der Fahrzeugkarosserie vorgesehen ist und einen Innenraum der Fahrzeugkarosserie vertikal unterteilt;
eine Radantriebseinheit (16), die an einer Unterseite des Trennelements angeordnet ist;
eine Steuereinheit (100), die an einer Oberseite des Trennelements angeordnet ist;
**dadurch gekennzeichnet, dass** das autonome Drehgestell auch
ein Kabel (102), das über das Trennelement angeordnet ist und die Radantriebseinheit mit der Steuereinheit verbindet, umfasst.

2. Autonomes Drehgestell nach Anspruch 1, ferner umfassend:
mehrere Säulenelemente, die sich von dem Trennelement nach oben erstrecken und eine Deckplatte tragen.

3. Autonomes Drehgestell nach Anspruch 1, ferner umfassend:
ein Hauptrad, das von der Radantriebseinheit angetrieben wird;
ein angetriebenes Rad, das auf mindestens einer Seite in einer Vorne-Hinten-Richtung in Bezug auf das Hauptrad vorgesehen ist; und
ein Hilfsrad, das auf einem Stufenabschnitt einer Fahrfläche läuft, wobei,
wenn das Hauptrad und das angetriebene Rad mit einer ebenen Fläche auf der Fahrfläche in Kontakt sind, das Hilfsrad über der ebenen Fläche positioniert ist.

4. Autonomes Drehgestell nach Anspruch 3, wobei
ein Außendurchmesser des Hilfsrades größer ist als ein Außendurchmesser des angetriebenen Rades.

5. Autonomes Drehgestell nach Anspruch 3 oder 4, wobei
das Hilfsrad in einer Position angeordnet ist, die das angetriebene Rad, wenn von einer in Links-Rechts-Richtung gesehen, überlappt.

6. Autonomes Drehgestell nach Anspruch 3 oder 4, ferner umfassend:
ein Paar linke und rechte Haupträder, wobei
das angetriebene Rad ein Paar linke und rechte vordere Antriebsräder und ein Paar linke und rechte hintere Antriebsräder umfasst und
Außendurchmesser des vorderen Antriebsrades und des hinteren Antriebsrades kleiner sind als der Außendurchmesser des Hauptrades.

7. Autonomes Drehgestell nach Anspruch 3 oder 4, ferner umfassend:
ein Aufhängungsmechanismus, der das Hauptrad an der Fahrzeugkarosserie so befestigt, dass es auf und ab bewegbar ist, wobei
der Aufhängungsmechanismus das Hauptrad gegen die Fahrfläche drückt.

8. Autonomes Drehgestell nach Anspruch 1, ferner umfassend:
ein Paar linke und rechte Radantriebseinheiten; und
eine Batterie, die zwischen dem Paar Radantriebseinheiten auf einer Unterseite des Trennelements angeordnet ist.

9. Autonomes Drehgestell nach Anspruch 1, ferner umfassend:
eine Medium-Befestigungs-/Löseeinheit zum Befestigen/Lösen eines Speichermediums; und
eine Energieversorgungsbedieneinheit, die eine Energieversorgung ein- oder ausschaltet, wobei
das Speichermedium unter mindestens einer Bedingung, dass die Energieversorgung durch die Energieversorgungsbedieneinheit in einem ausgeschalteten Zustand ist, von der Medium-Befestigungs-/Löseeinheit entfernt werden kann.

10. Autonomes Drehgestell nach Anspruch 9, wobei
die Energieversorgungseinheit einen Netzschalter und einen Schlüsselschalter umfasst, an dem der Netzschalter angebracht wird und von dem er gelöst wird, und
das Speichermedium aus der Medium-Befestigungs-/Löseeinheit entfernbar ist, indem der Netzschalter aus dem Schlüsselschalter entfernt wird, wenn sich die Energieversorgung in dem ausgeschalteten Zustand befindet.

11. Autonomes Drehgestell nach Anspruch 9, ferner umfassend:
eine Batterie, die als die Energieversorgung dient; und
einen Batteriehalter, an dem die Batterie befestigt und von dem sie gelöst werden kann, wobei
das Speichermedium aus der Medium-Befestigungs-/Löseeinheit entfernbar ist, indem die Batterie aus dem Batteriehalter entfernt wird, wenn sich die Energieversorgung indem ausgeschalteten Zustand befindet.

12. Autonomes Drehgestell nach Anspruch 9, wobei
die Fahrzeugkarosserie einen Fahrzeugkarosserie-Ein-/Ausstieg zum Einlegen und Entnehmen einer Batterie in den und aus dem Innenraum der Fahrzeugkarosserie und einen Türkörper umfasst, der in der Lage ist, den Fahrzeugkarosserie-Ein-/Ausstieg zu öffnen und zu schließen, und
das an der Medium-Befestigungs-/Löseeinheit befestigte Speichermedium an einer Position vorgesehen ist, die von einem Außenraum durch den Fahrzeugkarosserie-Ein-/Ausstieg zugänglich ist, wenn sich der Türkörper in einem geöffneten Zustand befindet.

13. Montageverfahren eines autonomen Drehgestells umfassend:
einen Schritt von Anbringen einer Radantriebseinheit an einer Unterseite eines Trennelements, das den Innenraum einer Fahrzeugkarosserie vertikal unterteilt;
einen Schritt von Anbringen einer Steuereinheit an einer Oberseite des Trennelements;
**dadurch gekennzeichnet, dass** das Montageverfahren auch
einen Schritt von Verbinden der Radantriebseinheit und der Steuereinheit mit einem Kabel, das über dem Trennelement vorgesehen ist, umfasst.

## Revendications

1. Un bogie autonome comprenant :
un châssis de véhicule (12) ;
un élément de séparation (108) qui est prévu sur le châssis de véhicule et qui sépare verticalement un espace interne de châssis de véhicule ;
une unité d'entraînement de roues (16) qui est disposée sur une surface inférieure de l'élément de séparation ;
une unité de commande (100) qui est disposée sur une surface supérieure de l'élément de séparation ;
**caractérisé en ce que** le bogie autonome comprend en outre un câble (102) qui est disposé en travers de l'élément de séparation et qui relie l'unité d'entraînement de roues et l'unité de commande.

2. Le bogie autonome selon la revendication 1, comprenant en outre :
une pluralité d'éléments de colonnes qui remontent depuis l'élément de séparation et supportent une plaque supérieure.

3. Le bogie autonome selon la revendication 1, comprenant en outre :
une roue principale entraînée par l'unité d'entraînement de roues ;
une roue menée prévue sur au moins un côté dans une direction avant-arrière par rapport à la roue principale ; et
une roue auxiliaire qui roule sur une partie échelonnée sur une surface de déplacement, dans lequel
lorsque la roue principale et la roue menée sont en contact avec une surface plane sur la surface de déplacement, la roue auxiliaire est positionnée au-dessus de la surface plane.

4. Le bogie autonome selon la revendication 3, dans lequel
un diamètre externe de la roue auxiliaire est supérieur à un diamètre externe de la roue menée.

5. Le bogie autonome selon la revendication 3 ou 4, dans lequel
la roue auxiliaire est disposée à un emplacement qui chevauche la roue menée lorsque l'on regarde dans une direction gauche-droite.

6. Le bogie autonome selon la revendication 3 ou 4, comprenant en outre :
une paire de roues principales gauche et droite, dans lequel
la roue menée comporte une paire de roues menées avant gauche et droite et une paire de roues menées arrière gauche et droite, et
les diamètres externes de la roue menée avant et de la roue menée arrière sont inférieurs à un diamètre externe de la roue principale.

7. Le bogie autonome selon la revendication 3 ou 4, comprenant en outre :
un mécanisme de suspension qui fixe la roue principale sur le châssis de véhicule afin qu'elle puisse se déplacer vers le haut et vers le bas, dans lequel
le mécanisme de suspension appuie la roue principale contre la surface de déplacement.

8. Le bogie autonome selon la revendication 1, comprenant en outre :
une paire d'unités d'entraînement de roues gauche et droite ; et
une batterie disposée entre la paire d'unités d'entraînement de roues sur un côté inférieur de l'élément de séparation.

9. Le bogie autonome selon la revendication 1, comprenant en outre :
une unité de fixation/de retrait de moyen destinée à fixer/retirer un moyen de stockage ; et
une unité de fonctionnement d'alimentation électrique qui active ou désactive une alimentation électrique, dans lequel
le moyen de stockage peut être retiré de l'unité de fixation/de retrait de moyen à au moins une condition selon laquelle l'alimentation électrique doit être désactivée par l'unité de fonctionnement d'alimentation électrique.

10. Le bogie autonome selon la revendication 9, dans lequel
l'unité de fonctionnement d'alimentation électrique comprend une clé d'alimentation, et un commutateur à clé sur lequel et depuis lequel la clé d'alimentation est fixée et retirée, et
le moyen de stockage peut être retiré de l'unité de fixation/de retrait de moyen, en retirant la clé d'alimentation du commutateur à clé, lorsque l'alimentation électrique est désactivée.

11. Le bogie autonome selon la revendication 9, comprenant en outre :
une batterie qui sert d'alimentation électrique ; et
un support de batterie sur lequel et depuis lequel la batterie peut être fixée et retirée, dans lequel
le moyen de stockage peut être retiré de l'unité de fixation/de retrait de moyen, en retirant la batterie du support de batterie, lorsque l'alimentation électrique est désactivée.

12. Le bogie autonome selon la revendication 9, dans lequel
le châssis de véhicule comprend une entrée/sortie de châssis de véhicule destinée à faire entrer et sortir une batterie de l'espace interne de châssis de véhicule, et un corps de portière capable d'ouvrir et de fermer l'entrée/la sortie de châssis de véhicule, et
le moyen de stockage fixé sur l'unité de fixation/de retrait de moyen est prévu à un emplacement accessible depuis un espace externe par le biais de l'entrée/de la sortie de châssis de véhicule lorsque le corps de portière est ouvert.

13. Une méthode d'assemblage destinée à un bogie autonome, comprenant :
une étape de fixation d'une unité d'entraînement de roues sur une surface inférieure d'un élément de séparation qui sépare verticalement un espace interne de châssis de véhicule d'un châssis de véhicule ;
une étape de fixation d'une unité de commande sur une surface supérieure de l'élément de séparation ;
**caractérisé en ce que** la méthode d'assemblage comprend aussi
une étape de raccordement de l'unité d'entraînement de roues et de l'unité de commande avec un câble disposé en travers de l'élément de séparation.
